(19) **Europäisches Patentamt European Patent Office Office européen des brevets**

(11) **EP 4 211 335 B1**

(12) **EUROPEAN PATENT SPECIFICATION**

(45) Date of publication and mention of the grant of the patent:
**01.04.2026 Bulletin 2026/14**

(21) Application number: **21867737.5**

(22) Date of filing: **13.09.2021**

(51) International Patent Classification (IPC):
*E21B 47/06* (2012.01)   *E21B 47/26* (2012.01)
*G01V 1/48* (2006.01)   *G01V 1/46* (2006.01)
*E21B 49/00* (2006.01)

(52) Cooperative Patent Classification (CPC):
**E21B 49/00; G01V 1/46; G01V 1/48; E21B 2200/20**

(86) International application number:
**PCT/US2021/050008**

(87) International publication number:
**WO 2022/056353 (17.03.2022 Gazette 2022/11)**

(54) **GEOLOGIC FORMATION CHARACTERIZATION**

**CHARAKTERISIERUNG GEOLOGISCHER FORMATIONEN**

**CARACTÉRISATION DE FORMATION GÉOLOGIQUE**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.09.2020 US 202063077489 P**

(43) Date of publication of application:
**19.07.2023 Bulletin 2023/29**

(73) Proprietors:
• **Services Pétroliers Schlumberger**
  **75007 Paris (FR)**
  Designated Contracting States:
  **FR**
• **GeoQuest Systems B.V.**
  **2586 BJ The Hague (NL)**
  Designated Contracting States:
  **AL AT BE BG CH CY CZ DE DK EE ES FI GB GR HR HU IE IS IT LI LT LU LV MC MK MT NL NO PL PT RO RS SE SI SK SM TR**

(72) Inventors:
• **JIANG, Lei**
  **Beijing 100084 (CN)**
• **CHEN, Li**
  **Beijing 100084 (CN)**
• **YU, Hua**
  **Beijing 100084 (CN)**
• **GISOLF, Adriaan**
  **011141 Bucharest (RO)**
• **DUMONT, Hadrien**
  **75340 Paris (FR)**
• **ALTUNDAS, Bilgin**
  **Burlington, Massachusetts 01803 (US)**
• **KRISTENSEN, Morten**
  **Cambridge, Massachusetts 02139 (US)**

(74) Representative: **Schlumberger Intellectual Property Department**
**Parkstraat 83**
**2514 JG Den Haag (NL)**

(56) References cited:
CN-A- 105 089 609     US-A1- 2014 230 538
US-A1- 2015 112 599     US-A1- 2015 112 599
US-B2- 7 107 188     US-B2- 9 488 752

• **FIKRI J KUCHUK ET AL: "SPE 120515 Radius of Investigation for Reserve Estimation from Pressure Transient Well Tests", 1 January 2009 (2009-01-01), XP055152331, Retrieved from the Internet <URL:https://www.onepetro.org/download/conference-paper/SPE-120515-MS?id=conference-paper/SPE-120515-MS> [retrieved on 20141111]**

- **TIM M. WHITTLE ET AL: "The Determination of Minimum Tested Volume from the Deconvolution of Well Test Pressure Transients", SPE ANNUAL TECHNICAL CONFERENCE AND EXHIBITION, 1 January 2008 (2008-01-01), XP055152379, DOI: 10.2118/116575-MS**

**Description**

CROSS-REFERENCE TO RELATED APPLICATION

The present document is based on and claims priority to U.S. Provisional Application Serial No.: 63/077,489, filed September 11, 2020.

BACKGROUND

Various types of equipment can be utilized to characterize a formation, which can include characterizing the formation as to its structural aspects and its physical properties. Where a formation includes one or more hydrocarbon reservoirs, operations and equipment can be selected and utilized according to a characterization of the formation for production of hydrocarbons. Characterization can facilitate simulation of operations, equipment performance, fluid flow, etc. For example, a digital representation of a formation can be constructed using sensor data acquired through performance of one or more characterization processes. For example, consider a characterization process that can drive fluid in a formation and acquire sensor data as to flow of fluid, directly and/or indirectly. In such an example, pressure can be utilized to drive fluid in a formation where a response thereto may depend on one or more pressures (e.g., formation pressure(s), etc.). Sensor data acquired during one or more operations may be utilized to determine a quantity and/or quality of formation fluids such as liquid and/or gas hydrocarbons, condensates, drilling muds, fluid contacts, and so forth. US 2015/0112599 A1 discloses determining the quality of data gathered in a wellbore in a subterranean formation. The conference paper "Radius of Investigation for Reserve Estimation from Pressure Transient Well Tests" by Fikri J. Kuchuk et al, SPE 120515, 1 January 2009, , discloses a method of radius of investigation for reserve estimation from pressure transient well tests.

SUMMARY

A method according to claim 1 includes receiving sensor data acquired using one or more downhole tool pressure gauges disposed in a borehole in a geologic formation responsive to a fluid operation, where the geologic formation includes a reservoir; and, for the fluid operation, using at least an infinite acting model, determining a distance of pressure influence in the geologic formation. A system according to claim 13 includes a processor; memory accessible to the processor; processor-executable instructions stored in the memory, executable to instruct the system to: receive sensor data acquired using one or more downhole tool pressure gauges disposed in a borehole in a geologic formation responsive to a fluid operation, where the geologic formation includes a reservoir; and, for the fluid operation, using at least an infinite acting model, determine a distance of pressure influence in the geologic formation. One or more computer-readable storage media according to claim 14 includes processor-executable instructions, executable to instruct a computing system to: receive sensor data acquired using one or more downhole tool pressure gauges disposed in a borehole in a geologic formation responsive to a fluid operation, where the geologic formation includes a reservoir; and, for the fluid operation, using at least an infinite acting model, determine a distance of pressure influence in the geologic formation.
This summary is provided to introduce a selection of concepts that are further described below in the detailed description. This summary is not intended to identify key or essential features of the claimed subject matter, nor is it intended to be used as an aid in limiting the scope of the claimed subject matter.

BRIEF DESCRIPTION OF THE DRAWINGS

Features and advantages of the described implementations can be more readily understood by reference to the following description taken in conjunction with the accompanying drawings.

Fig. 1 is a schematic diagram of a wellsite system that may employ downhole fluid analysis for determining fluid properties of a reservoir, in accordance with an embodiment;

Fig. 2 is a schematic diagram of another embodiment of a wellsite system that may employ downhole fluid analysis methods for determining fluid properties and formation characteristics within a wellbore, in accordance with an embodiment;

Fig. 3 is a schematic diagram of an embodiment of a trip-tank mud-pump assembly that may be used to circulate and control mud fluid levels through the wellbore, in accordance with an embodiment;

Fig. 4 illustrates examples of systems;

Fig. 5 illustrates an example of a system;

Fig. 6 illustrates an example of a system;

Fig. 7 illustrates examples of systems;

Fig. 8 illustrates an example of a method;

Fig. 9 illustrates examples of techniques;

Fig. 10 illustrates an example of a plot;

Fig. 11 illustrates an example of a plot;

Fig. 12 illustrates examples of plots;

Fig. 13 illustrates an example of a method;

Fig. 14 illustrates an example of a method;

Fig. 15 illustrates an example of a method with respect to an example of a geologic formation;

Fig. 16 illustrates examples of plots;

Fig. 17 illustrates examples of plots;

Fig. 18 illustrates examples of plots;

Fig. 19 illustrates examples of plots;

Fig. 20 illustrates an example of a method;

Fig. 21 illustrates an example of a plot;

Fig. 22 illustrates an example of a plot;

Fig. 23 illustrates an example of a method; and

Fig. 24 illustrates an example of a system and an example of a networked system.

DETAILED DESCRIPTION

The following description includes the best mode presently contemplated for practicing the described implementations. This description is not to be taken in a limiting sense, but rather is made merely for the purpose of describing the general principles of the implementations. The scope of the described implementations should be ascertained with reference to the issued claims.

One or more equipment operations can be utilized for acquisition and analysis representative of a geological formation downhole and/or wellbore (e.g., pressure and permeability) in delayed or real time for reservoir characterization, which may be part of one or more control processes that can issue one or more instructions to equipment. For example, consider injection equipment, production equipment, drilling equipment, data acquisition equipment, etc.

In certain downhole operations, it may be desirable to increase production pump-out rate of reservoir fluids within the reservoir during the downhole operation. The inability of the wellbore, also known as a borehole, to accommodate this influx can involve mixing formation fluid with circulating mud for removal from the wellbore. Accordingly, removal of the reservoir fluid may be dependent on the fluid level of circulating mud within the wellbore, which may be constrained within limited (e.g., a desired safe range, etc.). Variations in the fluid level of mud circulating through a wellbore may create pressure fluctuations (e.g., pressure oscillations) that result in noisy pressure measurements that may affect accuracy of formation pressure estimated based on the pressure measurements. As to pressure oscillations, these can be due to one or more phenomena, operations, etc. For example, mud pumps at surface can be driven by mechanized equipment that may generate pulsations, vibrations, etc. As another example, tubing that carries mud may be flexible or stiff and subject to motions, vibrations, etc.

Over-pressured mud within a wellbore may cause mud filtrate to infiltrate a formation and deposit a mud-cake on a wellbore surface. Mud-cake permeability tends substantially lower than formation permeability, which can thereby suppress pressure communication between a wellbore and formation fluid. However, circulation of mud and pumped-out formation fluid may hinder mud-cake growth. Thus, fluctuations in a wellbore can be communicated to the formation, though such fluctuations may be to some extent damped.

As to noise in measurements, various approaches attempt to remove noise in formation pressure measurements through application of filters in an effort to provide cleaner data such that a more accurate estimation of the formation pressure may be made. As an example, rather than filtering out noise where the noise itself is not utilized for informative value, a method can include assessing fluctuation noises transferred from a wellbore into a formation to estimate one or more petrophysical properties of the formation and/or mud-cake. Various embodiments described herein can include implementing one or more techniques for handling pressure oscillations, for example, using one or more types of filters, and determining petrophysical properties of a geological formation based at least in part on a frequency response of formation pressure. A frequency response of a formation pressure may allow assessment of parameters associated with, for example, a diffusion time across a mud-cake and a mobility ratio of a geological formation to a mud-cake. One or more of such parameters may be useful in determining permeability of a geological formation and/or mud-cake, and may facilitate characterization of productivity of a reservoir or reservoirs in the geological formation.

Although it is often used in pressure transient testing, radius of investigation, sometimes referred to as a transient drainage radius, lacks an acceptable and accurate definition. The radius of investigation (ROI or $r_{inv}$) can be a radius within which pressure in a formation is influenced by a fluid operation. While the term "radius" is utilized, more generally, a distance may be utilized (e.g., a distance of investigation), which may be measured from a borehole where a fluid operation is, at least in part, being performed. As an example, ROI may be defined as a computed maximum radius in a formation in which pressure has been affected during a flow period of a transient well test. ROI can provide meaning in relation to the total volume of reservoir that is represented by one or more computed reservoir parameters, such as $k_h$, the permeability thickness. As an example, an ROI may be inverted to determine a time for performance of a fluid operation that can investigate reservoir features at a given distance from a borehole (e.g., a wellbore of a well).

As an example, a method can include controlling a fluid operation using one or more computed ROI values. For example, consider controlling the fluid operation using an inversion of one or more ROI values to determine a time, a cutoff time, and/or one or more other fluid operational parameters for performing the fluid operation. As an example, a method can include issuing one or more control signals (e.g., a signal, a trigger, a command, an instruction, etc.) based at least in part on an ROI computation.

As an example, a formation may include one or more boundaries that can hinder fluid flow. For example, consider a boundary where the permeability is less than that of adjacent rock. In such an example, a fluid operation may influence pressure in the formation in a manner that is impacted by the boundary where, for example, the influence may be limited by the boundary. For example, an ROI may, in the direction of the boundary from a borehole, be limited to the distance of the borehole to the boundary. As to an infinite acting model, such a model may be a boundary-less model such that a boundary does not impact or otherwise limit an ROI with respect to time (e.g., consider a digital representation of an infinite region and/or a digital representation of a boundary that is at a distance that is unlikely to have an impact). As an example, a model may account for one or more boundaries and/or one or more types of boundaries (e.g., curved, straight, etc.).

As an example, permeability thickness can be the product of formation permeability, k, and producing formation thickness, h, in a producing well, referred to as $k_h$. The permeability thickness can be estimated using one or more buildup and drawdown tests and can be an indicator of flow potential of a well. The permeability thickness can be utilized in various operations, processes, etc., such as one or more of those for future performance, secondary and tertiary recovery potential, and well-stimulation procedures. As such, an improved ROI can improve various operations, processes, etc.

As an example, a method can include estimation of producing formation thickness from one or more well logging operations. As an example, permeability may be computed, for example, provided that a fluid formation volume factor and a viscosity are known. Accuracy of a computed permeability can depend heavily on accuracy of an estimated formation thickness and fluid properties.

As to a buildup operation, it can include measurement and analysis of pressure data (e.g., bottomhole, etc.), for example, as acquired after a producing well is shut in. One or more buildup tests may be performed to determine one or more of well flow capacity, permeability thickness, skin effect or other information. In various instances, soon after a well is shut in, the fluid in the wellbore can reach a somewhat quiescent state in which bottomhole pressure rises smoothly and may be readily measured, which can provide for interpretable test results.

As to a drawdown operation, it can include measurement and analysis of pressure data taken after a well is put on production, for example, initially or following an extended shut-in period. Drawdown data tend to include noise, meaning that the pressure moves up and down as fluid flows past a pressure gauge (or pressure gauges) where variations in flow rate can take place. Such noise can often be seen in new wells, in which well cleanup commonly occurs for days after production has begun. Such data tend to be difficult to interpret, and the noise can obscure one or more regions of interest. Transient downhole flow rates measured while flowing can be used to adjust pressure variations through convolution or deconvolution calculations that enable diagnosis and interpretation.

Pressure diffusion in a formation corresponds to an instantaneous propagation of a pressure signal in an entire spatial domain when a flow-rate or pressure pulse is applied (e.g., beginning of a drawdown or injection) to a sandface of a well. However, the initial pressure propagation tends to not be primarily diffusive; rather, it tends to propagate like a wave with a finite speed. For example, if a pressure gauge is disposed at a distance r in a formation, it may be expected that a pressure change (e.g., a decrease or an increase) will be detected after a period of time that may be of the order of seconds or minutes where the pressure gauge is accurate with 0.0 psi (1 psi = 6.89476 kPa) resolution. After an initial propagation, pressure can start to diffuse or propagate as diffusion, and there can be a pressure change at a given space and time above the pressure gauge resolution and natural background noise, which may be, for example, of the order of 0.1 psi; noting that one type of constant background noise can be from the effect of tidal forces.

Radius of investigation (ROI) can define a "tested" volume in that it provides an indication of how much formation volume is being investigated for a given duration of a transient test (e.g., how far a pressure influence may be experienced in a formation away from a borehole where the transient test is at least in part being performed). For exploration wells, a reservoir volume investigated can be a reason for performing a drillstem test or drill stem test (DST) and/or one or more other types of production tests. The extent of pressure diffusion (e.g., ROI) during a transient test can be valuable for exploration pressure transient well testing.

In some instances, a radius of influence and a radius of investigation may be defined differently. For example, a radius of influence may be qualitatively defined as the maximum distance from a pumping well up to which the influence of pumping is significant; while, for example, a radius of investigation may be qualitatively defined as the maximum distance from a pumping well up to which aquifer properties have a significant influence on drawdown at the well. In such an instance, the radius of investigation may be deemed to be smaller than the radius of influence; noting, that as may be appreciated, such a conclusion depends on definitions. As an example, according to various techniques described herein, for a reservoir a radius of investigation can be a distance that corresponds to pressure influence, for example, as determined at least in part through use of an infinite acting model (e.g., an infinite acting reservoir model, etc.).

As an example, a method can include deriving a detectable radius of investigation (ROI) for one or more flow periods, where an ROI may be derived for each individual flow period. An ROI can be instructive, as a physical region, in pressure transient testing analysis to evaluate oil and gas reservoir architecture for estimation of hydrocarbons in place and reserves.

As ROI is utilized for various processes, operations, etc., an improved definition may improve such processes, operations, etc. One definition can involve solely permeability, porosity, viscosity, total compressibility and time, without consideration of pumping history and gauge resolution. Another definition is based on the pressure change at some distant observations which tend to be relatively distance from a wellbore. Yet another definition uses the pressure measurement at a wellbore and monitors pressure deviation from an infinite acting solution due to presence of a boundary, for the case of constant drawdown flowrate.

As an example, an improved definition of ROI can provide for a detectable ROI for each drawdown and build-up pumping period, where the ROI is based on a pressure derivative deviation. In such an example, pump rate and gauge noise effects can be included. For example, by defining a derivative noise envelope, a method can discern a time when the derivative deviates from an infinite acting flow due to the presence of a boundary. Such an example provides a useful estimate of the detectable ROI for the given pumping period.

The foregoing approach provides relatively consistent results with current pressure transient interpretation, and helps to give an estimation of the minimum hydrocarbons in place.

As an example, a method can include generating an envelope of the Bourdet derivative due to the presence of noise. The Bourdet derivative as to pressure may be defined using an equation such as:

$$\left(\frac{dP}{dX}\right)_i = \frac{\frac{\Delta p_1}{\Delta X_1}\Delta X_2 + \frac{\Delta p_2}{\Delta X_2}\Delta X_1}{\Delta X_1 + \Delta X_2}$$

where P is pressure and X is superposition time.

As an example, a method can include determining detectable ROI for each flow period. As an example, a method can include performing an uncertainty analysis of detectable ROI for each flow period, for example, due to propagation of uncertainty as to one or more formation parameters.

As explained, radius of Investigation can be utilized in pressure transient testing analysis to evaluate oil and gas reservoir architecture. As explained, an ROI definition may be a relatively simple formula that is derived based on the start of observable boundary effects or pseudo-steady state flow regime, which solely involves permeability, porosity, viscosity, total compressibility, and time. Such a definition does not account for formation thickness, tool metrology, pumping history, or gauge resolution. Another definition is based on presumed pressure change at some radial distance away from wellbore that is inverted using an infinite acting line source pressure solution. While the later approach takes into account rate, formation thickness, and gauge resolution, it is applicable solely to infinite acting media and not intended for detecting one or more reservoir boundaries. Yet another definition is based on the pressure deviation at the wellbore from infinite acting pressure profiles due to the presence of a fault / circular closed boundary. While such an approach can take into account noise and gauge resolution, it is applicable solely during a single drawdown cycle with constant rate; it does not take into account tool metrology, the uncertainty in the formation properties, and is solely for fault /circular closed boundary.

As an example, an improved ROI can be based on a definition that ROI is the identification of a feature and its location, which results in a measurable deviation in downhole pressure or pressure change at a wellbore from an infinite acting reservoir. In such an example, a method can utilize an entire schedule or one or more selected drawdown or drawdown/build-up cycles while, for example, retaining an entire pumping history. Such an approach can account for drawdown rates, gauge noise, lunar tide effect, and uncertainty in one or more formation properties, which may allow for quantifying uncertainty in ROI by propagating the uncertainties due to noise and error in measurements to ROI computations. As an example, a workflow can provide for determining P10, P50, and P90 of theoretical distance to an anticipated boundary for a given test time.

Below, various approaches to ROI are described. One formula that has found common use can be expressed as follows:

$$\text{ROI} = c \sqrt{\frac{kt}{\phi \mu c_t}}$$

where k is the permeability, $\phi$ is the porosity, $\mu$ is viscosity, and ct is the compressibility.

As an example, the foregoing approach may be expressed as follows:

$$r_{inv} = c_r \sqrt{0.0002637 \frac{kt}{\Phi \mu c_t}}$$

Above, the value depends on k (horizontal permeability), $\Phi$ (porosity), $\mu$ (viscosity), ct (total compressibility) and t (operation time), and does not rely on other parameters, such as flowrate, formation thickness, gauge resolution, etc. This type of definition is mainly based on the theoretical pressure derivative change (the start of the observable boundary effect or pseudo steady-state flow regime) due to the presence of boundary, but does not correspond to operation history; thus, it cannot give a detectable ROI for each operation activity.

Common to various ROI models, c is a differentiating constant parameter that has a value that varies from 1.7 to 4. ROI predictions based on the foregoing equation often yield conservative estimates, uninformed by operational and formation parameters such as production rates or drawdown/build-up times, formation thickness, and probe properties.

Another type of definition utilizes a cylindrical geometry that is defined as the distance at which above a gauge resolution pressure change from baseline can occur. It assumes a pressure gauge is located at a certain distance $r_0$ (unknown). By detecting a pressure change above the pressure gauge apparent resolution $\delta p$ at time $t_0$, it inversely derives the value of $r_0$ from infinite acting line source model. This definition may provide an acceptable explanation about the pressure propagation in a reservoir, but it lacks a relationship with the existence of a boundary. Moreover, in real formation testing cases, there tends to be a gauge located in a wellbore and no gauge is located away from the wellbore that can be considered a distant gauge.

Yet another type of definition is based on the pressure deviation from the infinite acting flow due to the presence of boundary, measured by the pressure gauge at wellbore. One type of boundary (fault, circular closed boundary, channel, etc.) is assumed to exist at a distance $r_0$ (unknown). By detecting a pressure deviation $\delta p$ from infinite acting flow at time $t_0$, and using line source analytical solutions for boundary models, it is possible to derive the value of $r_0$. This definition offers an example about the detectable ROI by the gauge at wellbore, and the estimation of $r_0$ helps to calculate the reserve; however, the flowrate history is assumed to be a constant drawdown, not the real operation history.

Another approach is introduced in an article by Ramakrishnan et al., Radius of Investigation in Pressure Transient Testing, Transp Porous Med 131, 783-804 (2020) (https://doi.org/10.1007). The article by Ramakrishnan et al. utilizes a definition that includes the distance at which the inversion of noisy test data is able to discern an anomaly in borehole pressure within a given tolerance. Such an approach introduces noise models for creep, drift, hysteresis, and offset and incorporates noise to model ROI within a confidence interval reflecting the level of noise (standard deviation) expected during measurements. The expression for this method of ROI is given by:

$$\sigma_d = \frac{\sigma r_d}{|P|}\sqrt{\frac{\Delta t}{T}\left(e^{-\frac{2r_d^2}{\eta T}} - \frac{2r_d^2}{\eta T}E_1\left(\frac{2r_d^2}{\eta T}\right)\right)^{-1}}$$

where $\sigma_d$ is the standard deviation from the anticipated radius of investigation ($r_d$), $\sigma$ is the standard deviation in cumulative noise arising from creep, drift, hysteresis, and offset, $P = \frac{q\mu}{2\pi kh}$, $\eta = k/(\phi\mu c_T)$, q is the drawdown rate, h is the formation thickness, T is the drawdown time.

Such a model can be effective for test design for constant drawdown and can be applicable to a simple cylindrical geometry and account for the formation thickness and rate of drawdown; however, it is applicable to a fault boundary during constant drawdown cycle and does not take into account the anisotropy in permeability, the probe location, or tool geometry. Moreover, constraints on formation and tool properties, as well as the noise level, can limit the consideration of the foregoing expression for more general purpose ROI computations.

As mentioned, a method can utilize an improved ROI that is based on a definition that ROI is the identification of a feature and its location, which results into a measurable deviation in downhole pressure or pressure changes at the wellbore from an infinite acting (IA) reservoir. Such a method can utilize an entire pumping schedule or one or more drawdown and/or drawdown/build-up cycles while retaining an entire pumping history. Such an approach can account for drawdown rates, gauge noise, lunar tide effect, and uncertainty in one or more formation properties by propagating uncertainties due to noise and error in measurements to ROI computations. Such an approach can provide for the detection of the depth of investigation for a given test time or, alternatively, determine the test time for detecting a feature at a certain depth in probabilistic terms while taking into account an entire pumping history, formation properties, tool metrology, and environmental and tool noise.

As explained above, one or more improved ROIs may be utilized to improve characterization of a formation where the formation includes one or more reservoirs. As an example, such characterization can be part of an operational workflow that includes one or more control actions that can control equipment. As an example, an operation may depend on a formation characterization as achieved via use of one or more improved ROIs.

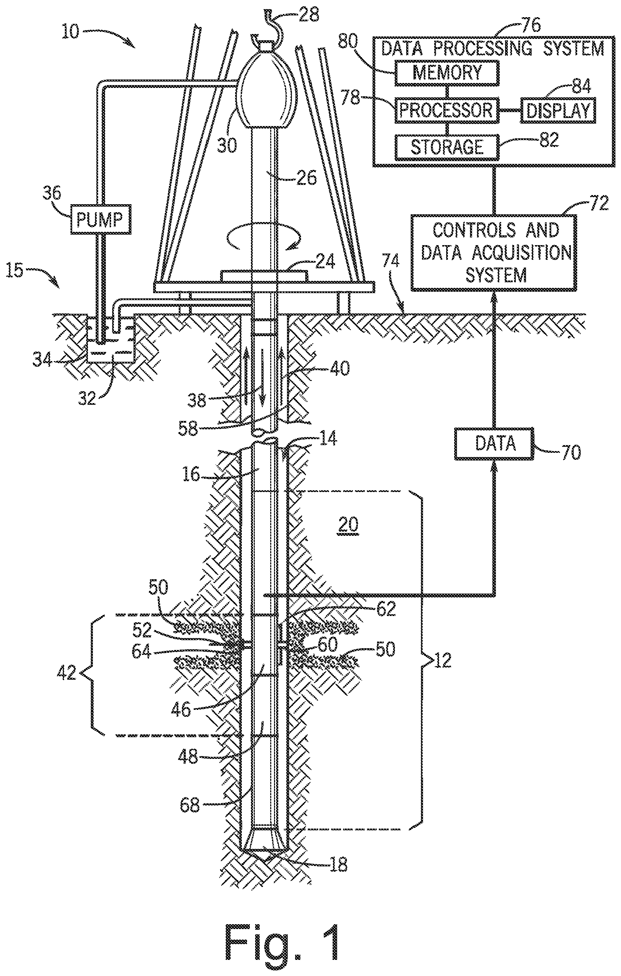

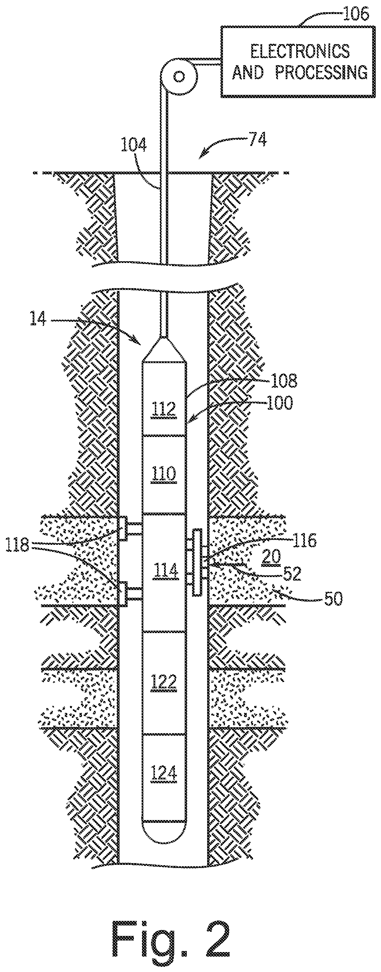

Figs. 1 and 2 depict examples of wellsite systems that may employ one or more fluid analysis systems and/or techniques described herein. Fig. 1 depicts a rig 10 with a downhole acquisition tool 12 suspended therefrom and into a wellbore 14 of a reservoir 15 via a drill string 16. The downhole acquisition tool 12 has a drill bit 18 at its lower end thereof that is used to advance the downhole acquisition tool 12 into geological formation 20 and form the wellbore 14. The drill string 16 is rotated by a rotary table 24, energized by means not shown, which engages a kelly 26 at the upper end of the drill string 16. The drill string 16 is suspended from a hook 28, attached to a traveling block (also not shown), through the kelly 26 and a rotary swivel 30 that permits rotation of the drill string 16 relative to the hook 28. The rig 10 is depicted as a land-based platform and derrick assembly used to form the wellbore 14 by rotary drilling. However, in various other embodiments, the rig 10 may be an offshore platform.

Drilling fluid or mud 32 (e.g., oil base mud (OBM) or water-based mud (WBM)) is stored in a pit 34 formed at the well site. A pump 36 delivers the drilling mud 32 to the interior of the drill string 16 via a port in the swivel 30, inducing the drilling mud 32 to flow downwardly through the drill string 16 as indicated by a directional arrow 38. The drilling fluid exits the drill string 16 via ports in the drill bit 18, and then circulates upwardly through the region between the outside of the drill string 16 and the wall of the wellbore 14, called the annulus, as indicated by directional arrows 40. The drilling mud 32 lubricates the drill bit 18 and carries formation cuttings up to the surface as it is returned to the pit 34 for recirculation.

The downhole acquisition tool 12, sometimes referred to as a bottom hole assembly ("BHA"), may be positioned near the drill bit 18 and includes various components with capabilities, such as measuring, processing, and storing information, as well as communicating with the surface. A telemetry device (not shown) also may be provided for communicating with a surface unit (not shown). As may be noted, the downhole acquisition tool 12 may be conveyed on wired drill pipe, a combination of wired drill pipe and post-drilling via wireline, or other suitable types of conveyance.

In certain embodiments, the downhole acquisition tool 12 includes a downhole fluid analysis (DFA) system. For example, the downhole acquisition tool 12 may include a sampling system 42 including a fluid communication component 46 and a sampling component 48. The components may be housed in a drill collar for performing various formation evaluation functions, such as pressure testing and fluid sampling, among others. As shown in Fig. 1, the fluid communication component 46 is positioned adjacent the sampling component 48; however the position of the fluid communication component 46, as well as other components, may vary in other embodiments. Additional devices, such as pumps, gauges, sensor, monitors or other devices usable in downhole sampling and/or testing also may be provided. The additional devices may be incorporated into one or more of the components 46 and 48 or disposed within separate components included within the sampling system 42.

The downhole acquisition tool 12 may evaluate fluid properties of reservoir fluid 50. Accordingly, the sampling system 42 may include sensors that may measure fluid properties such as gas-to-oil ratio (GOR), mass density, optical density (OD), composition of carbon dioxide ($CO_2$), C1, C2, C3, C4, C5, and C6+, formation volume factor, viscosity, resistivity, fluorescence, American Petroleum Institute (API) gravity, pressure, and combinations thereof of the reservoir fluid 50. The fluid communication module 46 includes a probe 60, which may be positioned in a stabilizer blade or rib 62. The probe 60 includes one or more inlets for receiving the formation fluid 52 and one or more flow lines (not shown) extending into the downhole acquisition tool 12 for passing fluids (e.g., the reservoir fluid 50) through the tool. In certain embodiments, the probe 60 may include a single inlet designed to direct the reservoir fluid 50 into a flowline within the downhole acquisition tool 12. Further, in other embodiments, the probe 60 may include multiple inlets that may, for example, be used for focused sampling. In these embodiments, the probe 60 may be connected to a sampling flow line, as well as to guard flow lines. The probe 60 may be movable between extended and retracted positions for selectively engaging the wellbore wall 58 of the wellbore 14 and acquiring fluid samples from the geological formation 20. One or more setting pistons 64 may be provided to assist in positioning the fluid communication device against the wellbore wall 58.

In certain embodiments, the downhole acquisition tool 12 includes a logging while drilling (LWD) component 68. The component 68 includes a radiation source that emits radiation (e.g., gamma rays) into the formation 20 to determine formation properties such as, e.g., lithology, density, formation geometry, reservoir boundaries, among others. The gamma rays interact with the formation through Compton scattering, which may attenuate the gamma rays. Sensors within the component 68 may detect the scattered gamma rays and determine the geological characteristics of the formation 20 based at least in part on the attenuated gamma rays.

The sensors within the downhole acquisition tool 12 may collect and transmit data 70 (e.g., log and/or DFA data) associated with the characteristics of the formation 20 and/or the fluid properties and the composition of the reservoir fluid 50 to a control and data acquisition system 72 at surface 74, where the data 70 may be stored and processed in a data processing system 76 of the control and data acquisition system 72.

The data processing system 76 may include a processor 78, memory 80, storage 82, and/or display 84. The memory 80 may include one or more tangible, non-transitory, machine readable media collectively storing one or more sets of instructions for operating the downhole acquisition tool 12, determining formation characteristics (e.g., geometry, connectivity, etc.) calculating and estimating fluid properties of the reservoir fluid 50, modeling the fluid behaviors using, e.g., equation of state models (EOS). The memory 80 may store reservoir modeling systems (e.g., geological process models, petroleum systems models, reservoir dynamics models, etc.), mixing rules and models associated with compositional characteristics of the reservoir fluid 50, equation of state (EOS) models for equilibrium and dynamic fluid behaviors (e.g., biodegradation, gas/condensate charge into oil, $CO_2$ charge into oil, fault block migration/subsidence, convective currents, among others), and any other information that may be used to determine geological and fluid characteristics of the formation 20 and reservoir fluid 52, respectively. In certain embodiments, the data processing system 54 may apply filters to remove noise from the data 70.

To process the data 70, the processor 78 may execute instructions stored in the memory 80 and/or storage 82. For example, the instructions may cause the processor to compare the data 70 (e.g., from the logging while drilling and/or downhole fluid analysis) with known reservoir properties estimated using the reservoir modeling systems, use the data 70 as inputs for the reservoir modeling systems, and identify geological and reservoir fluid parameters that may be used for exploration and production of the reservoir. As such, the memory 80 and/or storage 82 of the data processing system 76 may be any suitable article of manufacture that can store the instructions. By way of example, the memory 80 and/or the storage 82 may be ROM memory, random-access memory (RAM), flash memory, an optical storage medium, or a hard disk drive. The display 84 may be any suitable electronic display that can display information (e.g., logs, tables, cross-plots, reservoir maps, etc.) relating to properties of the well/reservoir as measured by the downhole acquisition tool 12. As may be appreciated that, although the data processing system 76 is shown by way of example as being located at the surface 74, the data processing system 76 may be located in the downhole acquisition tool 12. In such embodiments, some of the data 70 may be processed and stored downhole (e.g., within the wellbore 14), while some of the data 70 may be sent to the surface 74 (e.g., in real time). In certain embodiments, the data processing system 76 may use information obtained from petroleum system modeling operations, ad hoc assertions from the operator, empirical historical data (e.g., case study reservoir data) in combination with or lieu of the data 70 to determine certain parameters of the reservoir 8.

Fig. 2 depicts an example of a wireline downhole tool 100 that may employ one or more systems and/or techniques described herein to determine formation and fluid property characteristics of the reservoir 8. The downhole tool 100 is suspended in the wellbore 14 from the lower end of a multi-conductor cable 104 that is spooled on a winch at the surface 74. Similar to the downhole acquisition tool 12, the wireline downhole tool 100 may be conveyed on wired drill pipe, a combination of wired drill pipe and wireline, or other suitable types of conveyance. The cable 104 is communicatively coupled to an electronics and processing system 106. The downhole tool 100 includes an elongated body 108 that houses modules 110, 112, 114, 122, and 124 that provide various functionalities including imaging, fluid sampling, fluid testing, operational control, and communication, among others. For example, the modules 110 and 112 may provide additional functionality such as fluid analysis, resistivity measurements, operational control, communications, coring, and/or imaging, among others.

As shown in Fig. 2, the component 114 is a fluid communication component 114 that has a selectively extendable probe 116 and backup pistons 118 that are arranged on opposite sides of the elongated body 108. The extendable probe 116 is configured to selectively seal off or isolate selected portions of the wall 58 of the wellbore 14 to fluidly couple to the adjacent geological formation 20 and/or to draw fluid samples from the geological formation 20. The probe 116 may include a single inlet or multiple inlets designed for guarded or focused sampling. The reservoir fluid 50 may be expelled to the wellbore through a port in the body 108 or the reservoir fluid 50 may be sent to one or more fluid sampling components 122 and 124. The fluid sampling components 122 and 124 may include sample chambers that store the reservoir fluid 50. In the illustrated example, the electronics and processing system 106 and/or a downhole control system are configured to control the extendable probe assembly 116 and/or the drawing of a fluid sample from the formation 20 to enable analysis of the fluid properties of the reservoir fluid 50, as discussed above.

As discussed above, it may be desirable to increase a production pump-out rate of the reservoir fluid 50 during formation testing operations. For example, in certain embodiments, the production pump-out rate of the reservoir fluid 50 from the geological formation 20 may be increased by between approximately 25% and approximately 100%. However, the wellbore 14 may be unable to accommodate the increased influx of the reservoir fluid 50. Therefore, the reservoir fluid 50 may be mixed with the mud 32 to facilitate removal of the reservoir fluid 50 from the wellbore 14, thereby allowing the production pump-out rate to be increased. As such, a fluid level of mud 32 circulating within the annulus of the wellbore 14 may change over time during formation testing depending on the production pump-out rate. Accordingly, the removal of the reservoir fluid 50 from the wellbore 14 may depend on a fluid level of the mud 32 within the wellbore 14. Therefore, the fluid level of the mud 32 circulating within the wellbore 14 may be subjected to control, for example, to be maintained within an acceptable threshold range to achieve a desired production pump-out rate. The fluid levels of the mud 32 may be maintained by continuous operation of a feed-back controlled mud pump during formation testing applications.

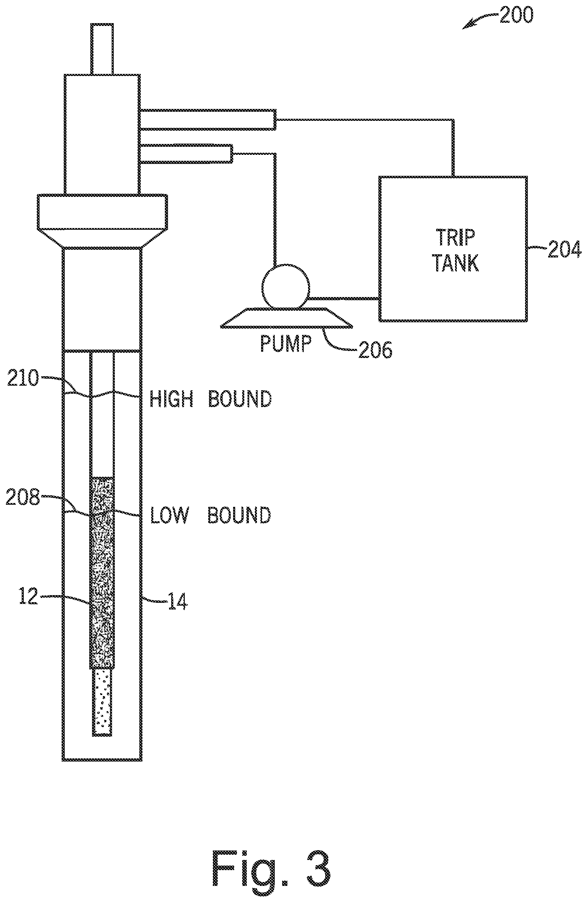

Fig. 3 illustrates an embodiment of a trip-tank mud-pump assembly 200 that may control fluid levels of the mud 32 circulating within the wellbore 14. The trip-tank mud-pump assembly 200 includes a trip tank 204 (e.g., a container or containers) that contains and provides the mud 32 that is circulated through the wellbore 14 during drilling, or, if desired, post drilling. In addition to the trip tank 204, the trip-tank mud-pump assembly 200 also includes a mud pump 206 that pumps the mud 32 into and out of the wellbore 14. The mud pump 206 circulates the mud 32 to and from the wellbore 14 based on the fluid level of the mud 32 within the wellbore 14. For example, when the fluid level of the mud 32 is at or below a low bound level 208, the mud-pump 206 pumps the mud 32 from the trip tank 204 into the wellbore 14. The mud-pump 206 may continue to pump the mud 32 from the trip tank 204 into the wellbore 14 until the fluid level of the mud 32 is above the low bound level 208 and below an upper bound level 210. In contrast, if the fluid level of the mud 32 is above the upper bound level 210, the mud-pump 206 removes a portion of the mud 32 from the wellbore 14 and into the trip tank 204 until the fluid level of the mud 32 within the wellbore 14 is below the upper bound level 210 and above the low bound level 208. In certain embodiments, a flow rate of the mud-pump 206 may be constant (e.g., non-variable) throughout the formation testing. In other embodiments, the flow rate of the mud-pump 206 may vary throughout the formation testing to maintain the mud 32 within the bound levels 208, 210.

During circulation of the mud 32 through the wellbore 14, a portion of the mud 32 may flow into the geological formation 20, thereby decreasing the fluid level of the mud 32 circulating within the wellbore 14. Variations in the fluid level of the mud 32 may result in fluctuations in formation pressure. If the loss rate $q_l$ of the mud 32 is fixed, a periodicity for pressure oscillations within the wellbore 14 during formation testing may be expressed as follows:

$$\{\pi(r_w^2 - r_d^2)\Delta(l_t - l_b)\}\left(\frac{1}{(q_{pb}+q_l)} + \frac{1}{(q_{pd}-q_l)}\right)$$

where $l_b$ and $l_t$ are the lower bound level 208 and the upper bound level 210, respectively, for the set height in the wellbore 14 for pump on-off control; $r_w$ and $r_d$ are wellbore and drill pipe radii, respectively, and $q_p$ is the flow rate of the mud-pump 206. In certain embodiments, the mud-pump 206 may be operate bidirectionally. That is, the mud-pump 206 may be used to pump the mud 32 into and out of the wellbore 14. Accordingly, the pump-out/drawdown rate is $q_{pd}$ and the pump-in/build-up rate is $q_{pb}$. In other embodiments, the mud-pump 206 operates unidirectionally (e.g., pumps the mud 32 into or out of the wellbore 14). Accordingly, either the $q_{pd}$ or the $q_{pb}$ is zero. The magnitude of pressure fluctuation in the wellbore 14 may be expressed as follows:

$$\rho_m g(l_t - l_b)\cos\theta$$

where $\rho_m$ is mud density, g is acceleration (e.g., due to gravitational forces), and $\theta$ is a wellbore angle from the vertical between $l_t$ and $l_b$. The magnitude and time period for the pressure fluctuation may be compared with measured values for error diagnostics.

During formation testing, the probe 60 of the downhole acquisition tool 12 is set past the mud-cake following a flowing period. Setting the probe 60 past the mud filter cake may cause a pressure of the probe 60 to be approximately equal to the formation pressure, once communication is established by drawing down formation fluid and allowing pressure to build-up. Pressure build-up in an infinitely radial and thick reservoir is spherical and has a response of $\sqrt{(1/t)}$, where t is the elapsed time after a flow rate change. In a finite-thickness reservoir the pressure build-up mimics cylindrical flow and has a response of Int. For multiple flow rates, superposition is used to infer an extrapolation axis, and determine formation pressure. However, the mud-cake has a finite nonzero permeability that may result in wellbore pressure fluctuations to be communicated (e.g., transferred) to the formation, which may decrease the accuracy of the formation pressure obtained via extrapolation techniques. Therefore, it may be desirable to apply filters to build-up formation pressure data to improve the accuracy of the formation pressure. A method for determining the build-up formation pressure by applying filters to the build-up formation pressure data obtained in situ in real-time with the downhole acquisition tool 12 may be implemented. For example, the downhole acquisition tool 12 can be positioned at a desired depth within the wellbore 14 and a pressure of the formation and the wellbore can be measured. For example, the downhole acquisition tool 12 can be lowered into the wellbore 14, as discussed above, such that the probe 60, 116 is within a region of interest (not to be confused with a radius of interest or ROI). The probe 60, 116 can face toward the geological formation 20 to enable measurement of the formation and wellbore pressure.

A US Patent Application having Serial No. 16/014,543, published as US 20180371903 on 27 December 2018, to Li et al., assigned to Schlumberger Technology Corporation. The '543 application describes an example of a method that includes operating a downhole acquisition tool in a wellbore in a geological formation and performing formation testing using the downhole acquisition tool in the wellbore to determine at least one measurement associated within the geological formation, the wellbore, or both. The downhole acquisition tool includes one or more sensors that may detect the at least one measurement and the at least one measurement includes formation pressure, wellbore pressure, or both. The method also includes using a processor of the downhole acquisition tool to obtain a response characteristic associated with the formation, the wellbore, or both based on oscillations in the at least one measurement and determining at least one petrophysical property of the geological formation, the wellbore, or both, based on the response characteristic. The petrophysical property includes permeability, mud filter cake permeability, or both. The '543 application describes various techniques as to data, including filtering using one or more types of filters. The '543 application also describes various types of equipment, including sensors or gauges (e.g., quartz, strain, etc.). As an example, one or more techniques, technologies, etc., described herein may utilize one or more techniques, technologies, etc., described in the '543 application.

As an example, a method can include utilizing a system that can be a test or testing system. For example, a system may be a drill string system, a wireline system or another type of system. As to a wireline system, consider one or more features of the ORA intelligent wireline formation testing platform (Schlumberger Limited, Houston, Texas). The ORA platform includes downhole tool components of a downhole system with a dual flowline architecture, laboratory-accuracy metrology, and smart downhole automation. Flow management options from less than 1 to over 100 bbl/d (1 bbl = 158.987 l), in combination with focused radial probes and a dual-inlet dual-packer system, can perform focused sampling that may be utilized for deep transient testing operations using wireline. Digital capabilities can improve reservoir evaluation where intelligent planning can bring together relevant information for designing an optimal hardware configuration and data-acquisition strategy. Operations control can provide collaborative access to operations and results. Contextual insights can provide detailed 2D and 3D visualizations of data acquired in reservoir context on a customized interactive dashboard for making real-time informed decisions. An ORA system can include a dedicated pump for both the sample and guard flowlines, such that flow manager features can precisely and independently control both the rate and pressure of each line (e.g., for fast fluid cleanup, etc.). A controller provides for relatively fine pump control, that unlocks fluid access: In loose formations, sanding exposure is reduced; whereas in in tight, low-mobility rock, excessive pressure drawdown may be reduced, for example, to keep fluids in single phase. An ORA system can include one or more of a dual-flowline spectrometry sub-system, calibrated resistivity sub-system, a high-accuracy density sub-system, a full-spectrum viscosity sub-system, and a high-accuracy and high-resolution pressure gauge (e.g., +/- 2 psi accuracy and 0.005 psi resolution (1 psi = 6.89476 kPa)). An ORA system can include one or more features for automated and rapid inflation, for example, to expand in a borehole along with automatable pumping and flow management. For example, an ORA system can include one or more packers that can be controlled for inflation to perform one or more fluid operations (e.g., test or testing operations, etc.). As to fluid handling, a dual-inlet interval may provide for higher flow rates (e.g., over 100 bbl/d). As an example, an ORA system may be utilized in a workflow for zone-by-zone delivery.

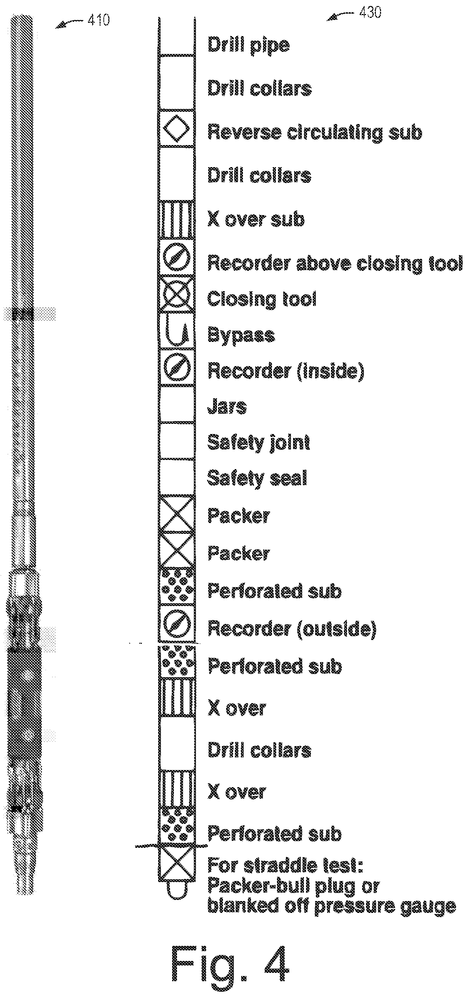

Fig. 4 shows an example of a wireline system 410 (e.g., an ORA system, etc.) and an example of another system 430 that can be a drill stem test string. As shown, the system can include packers, a downhole shut-in valve, a safety joint, and one or more pressure gauges. In the example of Fig. 4, the bottom packer and a blanked off gauge are shown as an "add on" to a straddle test.

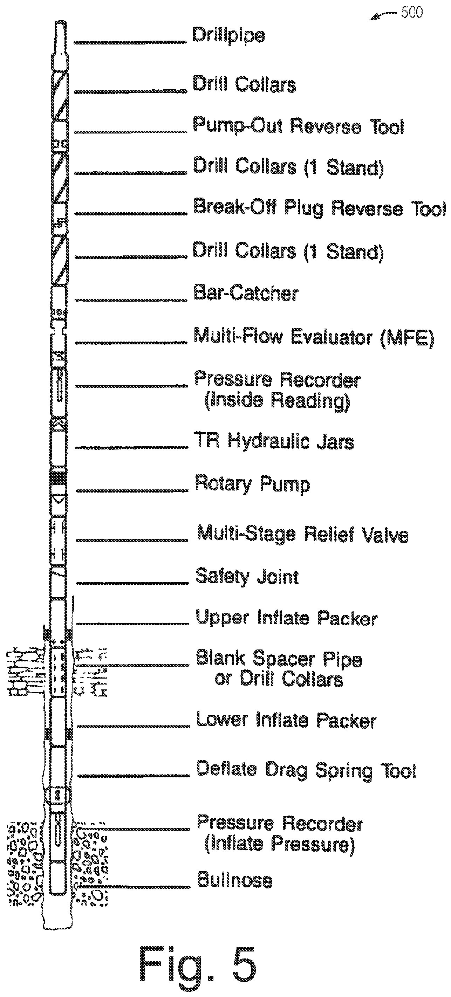

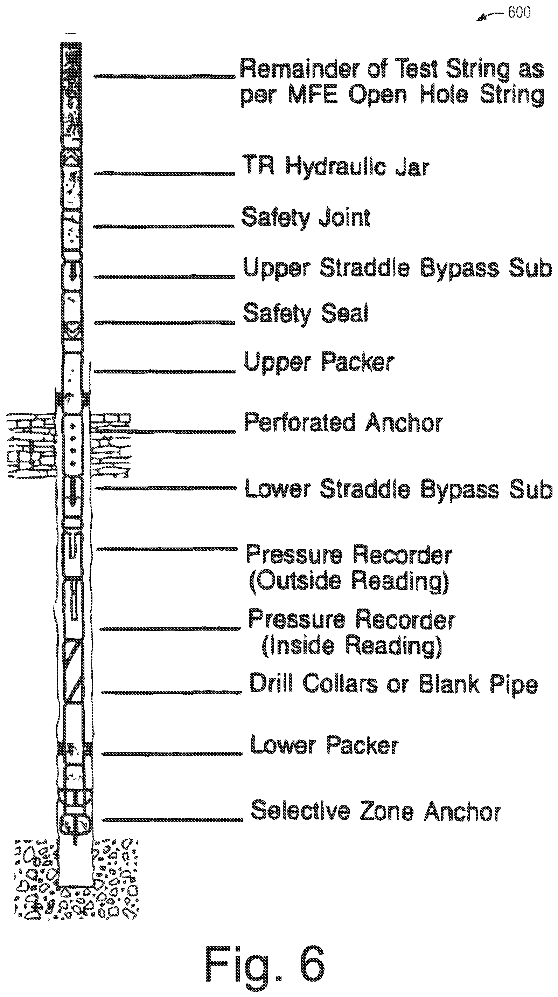

Figs. 5 and 6 show example systems 500 and 600 where the system 500 can be a straddle drill stem test tool string (e.g., MFE inflate open hole string (straddle, off-bottom)) and where the system 600 can be a straddle drill stem test tool string (e.g., MFE straddle string (open hole, off-bottom)).

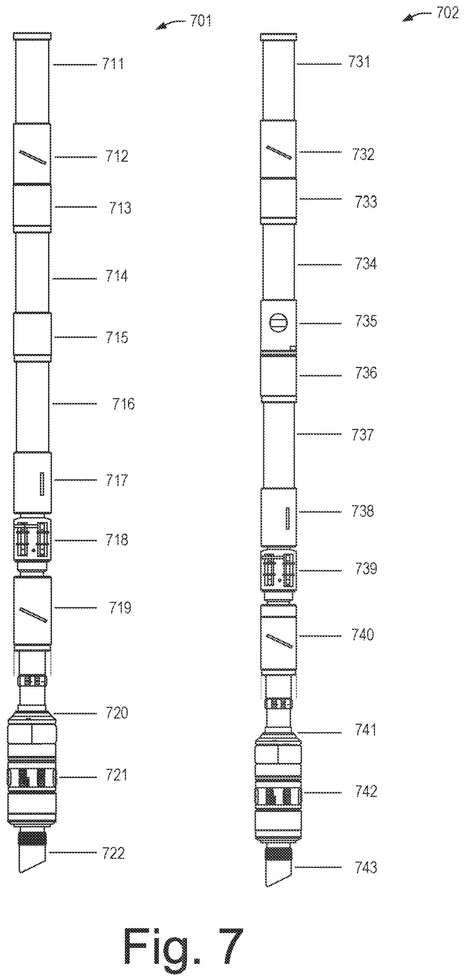

Fig. 7 shows example systems 701 and 702, which can be suitable for use in various conditions such as, for example, high pressure and high temperature (HPHT) conditions. In Fig. 7, one or both of the systems 701 and 702 may be utilized for a single-shot drill stem testing operation.

As shown in Fig. 7, from top to bottom, the system 701 can include tubing 711, a tubing tester valve 712, a single-shot reversing valve 713, tubing 714, a single-shot reversing valve 715, tubing 716, a pump-through flapper safety valve 717, a recorder carrier 718, a tubing tester valve 719, a seal assembly 720, a permanent packer 721 and a wireline reentry guide 722.

As shown in Fig. 7, from top to bottom, the system 702 can include tubing 731, a tubing tester valve 732, a single-shot reversing valve 733, tubing 734, a dual-action valve 735, a single-shot reversing valve 736, tubing 737, a pump-through flapper safety valve 738, a recorder carrier 739, a tubing tester valve 740, a seal assembly 741, a permanent packer 742 and a wireline reentry guide 743.

As an example, a system can include a high temperature quartz gauge. For example, consider a ceramic, single-substrate-constructed MCM that can provide for resolution at differences less than approximately 0.01 psi at a sampling rate of approximately one second (e.g., recording rate). Such a gauge can include electronics with ceramic MCM components onto a single substrate, which can provide for a reduced number of connections and fewer components. As an example, a gauge can include telemetry circuitry for purposes of communication using one or more techniques and/or technologies. For example, consider a dowhole to surface transmission time that may be of the order of tens of seconds using a wireless mode. As an example, a gauge can include a processor and/or memory. As an example, memory may be utilized for storage of data and/or for storage of instructions that may be executable by a processor (e.g., a microprocessor, microcontroller, etc.). As an example, a gauge may include memory sufficient to store days of data sampled at a rate of one sample per second. As an example, a gauge may be operable in an autonomous manner for a period of days, weeks, months, etc. As an example, a gauge may have an accuracy of approximately +/- 5 psi or less. For example, consider a gauge with a full scale accuracy of less than 0.02 percent. As mentioned, resolution may be of the order of 0.01 psi or less. As to drift, on an annual basis, it may be less than 0.03 percent of full scale (e.g., at a rated pressure and temperature). As an example, a gauge may be a SIGNATURE quartz gauge (Schlumberger Limited, Houston, Texas).

As mentioned, a method may be performed using one or more types of system, which can include wireline and/or drill string types of systems.

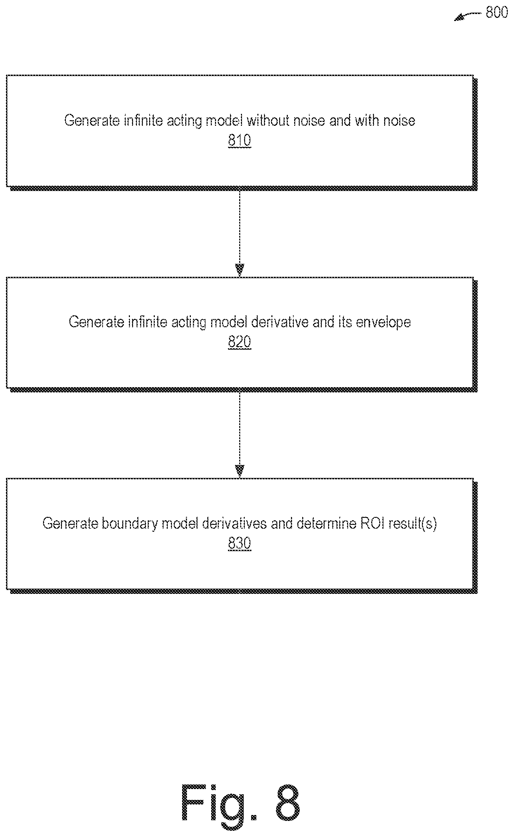

Fig. 8 shows an example of a method 800 for computing an ROI value using data acquired during one or more operations. For example, the method 800 can be utilized for determine a detectable ROI for each pumping period (drawdown and/or build-up). The method 800 can be utilized during one or more operations and, for example, for a current pumping period, to determine if a derivative of acquired data with respect to time follows an infinite acting behavior where a distance can be computed that can provide some assurances that at that distance, no boundary exists.

As shown, the method 800 can include various actions for computing a detectable ROI for each pumping period. The method 800 can include a generation block 810 for generating an infinite action model without noise and with noise, a generation block 820 for generating an infinite acting model derivative and a corresponding envelope, and a generation block 830 for generating boundary model derivatives for computing ROI results.

As to the block 810, consider a process that can generate the infinite acting model without and with noise in a manner that depends on well, tool and formation parameters. In such an example, the well parameters (e.g., wellbore radius, inclination, etc.) and tool parameters (e.g., tool string configuration, inlet shapes, etc.) can be provided (e.g., via access to a data file, via entry using a graphical user interface, etc.). As to the formation parameters (e.g., permeability, porosity, total compressibility, thickness, etc.), these may be provided via one or more of petrophysics logs, pressure transient interpretation, and another source or sources. In the method 800, once the parameters are set, with flowrate history, the pressure response for an infinite acting reservoir can be computed and utilized, for example, as a benchmark. Meanwhile, noise effect (e.g., one or more of gauge drift, creep, tidal effect, random offset, etc.) can be added to generate pressure with noise.

As to generation of an infinite acting model derivative and its envelope, consider, for a selected period (e.g., drawdown or build-up), the Bourdet derivative for an infinite acting pressure response with/without noise can be computed. In such an example, one or more options may be available to compute such a derivative. For example, consider forward, central, or backward.

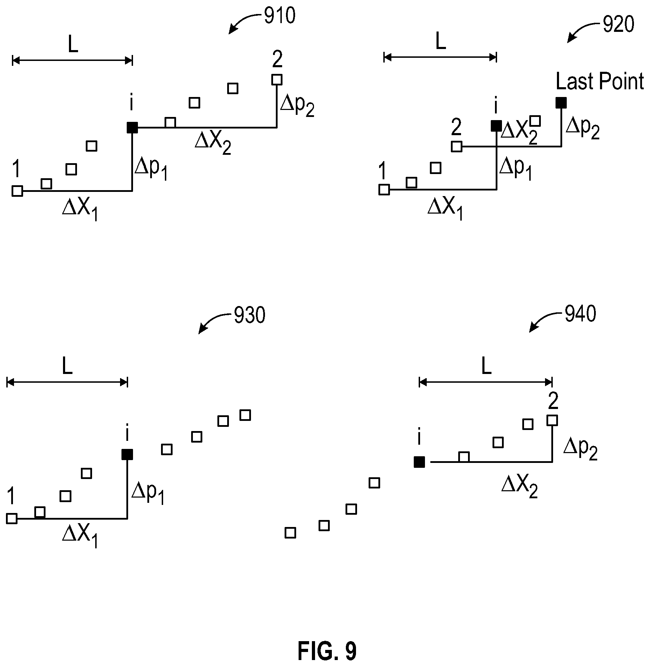

Fig. 9 shows various graphical examples 910, 920, 930 and 940 as to computation of derivatives of pressure data with respect to time.

As to central, which can be a 3 point central difference method, for the non-ending points (whose distance to the last point > L), the derivative can be computed as shown in the graphic 910 of Fig. 9, as expressed below:

$$\left(\frac{dP}{dX}\right)_i = \frac{\frac{\Delta p_1}{\Delta X_1}\Delta X_2 + \frac{\Delta p_2}{\Delta X_2}\Delta X_1}{\Delta X_1 + \Delta X_2} \qquad (1)$$

where Y axis is the delta pressure for the selected pumping period, and X axis is the superposition time. L is a pre-defined smoothing factor on the X axis scale. The points 1 and 2 are respectively the first backward and forward point at distance > L. $\Delta X_1$ and $\Delta X_2$ are the corresponding difference of superposition time.

For the ending points (whose distance to the last point < L), the formula (1) may still be used, but the point 2 can be the first backward point at distance >L from the last point. Thus, $\Delta X_2$ and $\Delta p_2$ are the superposition time difference and pressure difference between point 2 and the last point.

The graphic 920 of Fig. 9 shows how the Bourdet derivative may be computed using the central method for ending points.

The graphic 930 of Fig. 9 shows a backward option to calculate the derivative with the first backward point at distance > L. Such an approach may be expressed as follows:

$$\left(\frac{dP}{dX}\right)_i = \frac{\Delta p_1}{\Delta X_1} \qquad (2)$$

The graphic 940 of Fig. 9 shows a forward option that can use the first forward point at distance >L to calculate the derivative, for example, using an expression such as:

$$\left(\frac{dP}{dX}\right)_i = \frac{\Delta p_1}{\Delta X_2} \qquad (3)$$

The Bourdet derivative formulas (1), (2) or (3) can be applied for both noiseless and noisy pressure measurement.

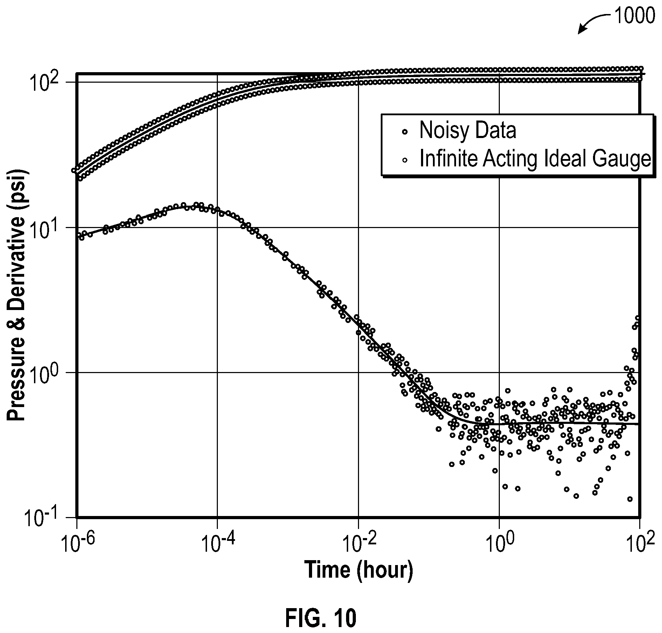

Fig. 10 shows an example plot 1000 of noiseless and noisy pressure and their corresponding Bourdet derivative from using Eq. (1). Specifically, the plot 1000 is a plot of pressure differential (e.g. delta pressure) and derivative in psi versus time in hours, both on a log scale.

As shown in Fig. 10, due to the presence of noise, the Bourdet derivative of noisy data tends to scatter around the noiseless data. For the ROI calculation, a method can include identifying the time when a boundary model derivative deviates from the infinite acting model. The presence of noise tends to make this identification relatively complex and difficult to quantify. As explained, a method can include deriving an envelope for a noisy data derivative. In such an example, if the derivative lies out of the envelope, a conclusion can be made that the derivative deviation is due to the presence of a boundary instead of noise effect.

As to deriving the derivative envelope, consider an approach that can consider noise with a normal distribution (e.g., a derivative envelope for noise with a normal distribution). In such an example, each pressure measurement $p_i$ can be represented by components such as, for example:

$$p_i = p_{i\_true} + \varepsilon_i \qquad (4)$$

where $p_{i\_true}$ is the true pressure value and $\varepsilon_i$ is the noise.

In such an example, for each measurement, if $\varepsilon_i$ is independent and identically distributed with a normal distribution ($\varepsilon_i \sim N(0, \sigma^2)$), the derivative envelope can be derived analytically as follows:

$$\Delta p' = \frac{\frac{p_i - p_1}{\Delta X_1}\Delta X_2 + \frac{p_2 - p_i}{\Delta X_2}\Delta X_1}{\Delta X_1 + \Delta X_2} = \Delta p'_{true} + \varepsilon_3 \qquad (5)$$

where $\Delta p'$ is the derivative value of noisy data, $\Delta p'_{true}$ is the derivative of noiseless data, and $\varepsilon_3$ is the derivative noise due to the pressure noise.

As an example, for a different derivative computation method, $\varepsilon_3$ can follow a different distribution.

As an example, if the central method is adopted, for the non-ending points:

$$\varepsilon_3 \sim N(0, \sigma_3{}^2) \sim N\left(0, \frac{2\sigma^2}{(\Delta X_1 + \Delta X_2)^2}\left[\left(\frac{\Delta X_2}{\Delta X_1}\right)^2 + \left(\frac{\Delta X_1}{\Delta X_2}\right)^2 - 1\right]\right) \qquad (6)$$

while for the ending points:

$$\varepsilon_3 \sim N(0, \sigma_3{}^2) \sim N\left(0, \frac{2\sigma^2}{(\Delta X_1 + \Delta X_2)^2}\left[\left(\frac{\Delta X_2}{\Delta X_1}\right)^2 + \left(\frac{\Delta X_1}{\Delta X_2}\right)^2\right]\right) \qquad (7)$$

Where the backward method is adopted:

$$\varepsilon_3 \sim N(0, \sigma_3{}^2) \sim N\left(0, \frac{2\sigma^2}{(\Delta X_1)^2}\right) \qquad (8)$$

And, if the forward method is adopted:

$$\varepsilon_3 \sim N(0, \sigma_3{}^2) \sim N\left(0, \frac{2\sigma^2}{(\Delta X_2)^2}\right) \qquad (9)$$

As $\varepsilon_3$ follow can follow a certain law, a different confidence level may be chosen to set as the derivative noise envelope. For example, consider using a 95% confidence bound ($\Delta p'_{true} \pm 2\sigma_3$) as the derivative noise envelope.

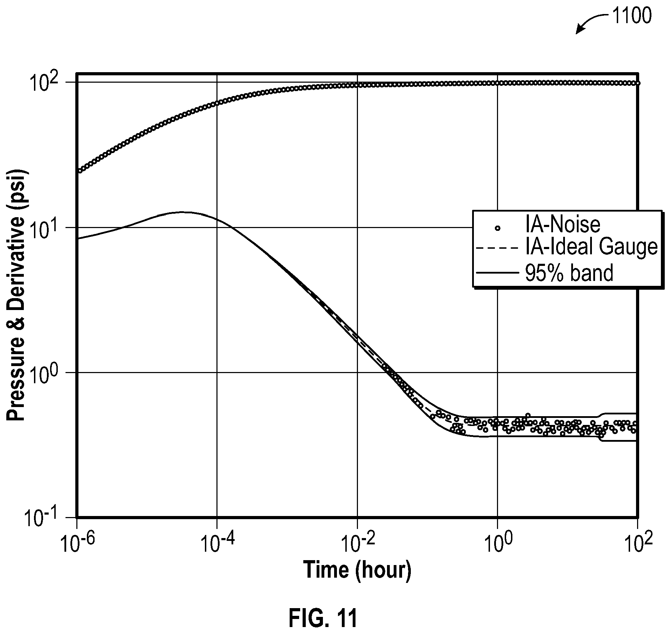

Fig. 11 shows an example plot 1100 akin to the plot 1000 of Fig. 10 where an example of a derivative envelope is shown (e.g., using a 95% confidence bound). As an example, a central 3 points difference method can be used to generate the derivative. In the plot 1100, the noiseless derivative is marked as 'IA-Ideal Gauge' in a magenta color at the bottom part while the noisy derivative is marked as 'IA- Noise', and a 95% confidence bound ($\Delta p'_{true} \pm 2\sigma_3$) is chosen as the derivative noise envelope.

As to computation of a derivative envelope for noise with one or more different distributions, a method can include selecting one or more distributions and assessing data with respect to each of the one or more distributions, for example, to determine one or more points, regions, etc., where contact and/or crossing may occur between a derivative envelope and data derived values.

As explained, an assumption may be made that noise follows a normal distribution. However, if various detailed types of noise may be identified and quantified, a derivative envelope may be computed in a more detailed manner.

As to some examples of types of noise that can be present in pressure measurements, such types can include one or more of drift, creep, offset, and tidal effects, as specified in Section 2.2 in Ramakrishnan et al., Radius of Investigation in Pressure Transient Testing, Transp Porous Med 131, 783-804 (2020) (https://doi.org/10.1007).

As analytical solutions may not be readily available for particular derivative noise envelopes, one or more numerical techniques may be utilized. For example, consider a Monte-Carlo approach, a finite difference approach, a finite element approach, etc.

As explained, one or more types of noise may be modeled and, for example, a number of noise cases may be generated (e.g., according to distribution, etc.) where upper and lower envelope bounds may be identified, for example, according to a predefined confidence level.

As an example, a method can include generation of boundary model derivatives for ROI result(s). For example, a detectable ROI can be based on one or more different boundary models where one boundary type (e.g., fault, circular no-flow boundary, channel, etc.) may be selected. As an example, a method can then compute pressure and derivatives of different boundary distances.

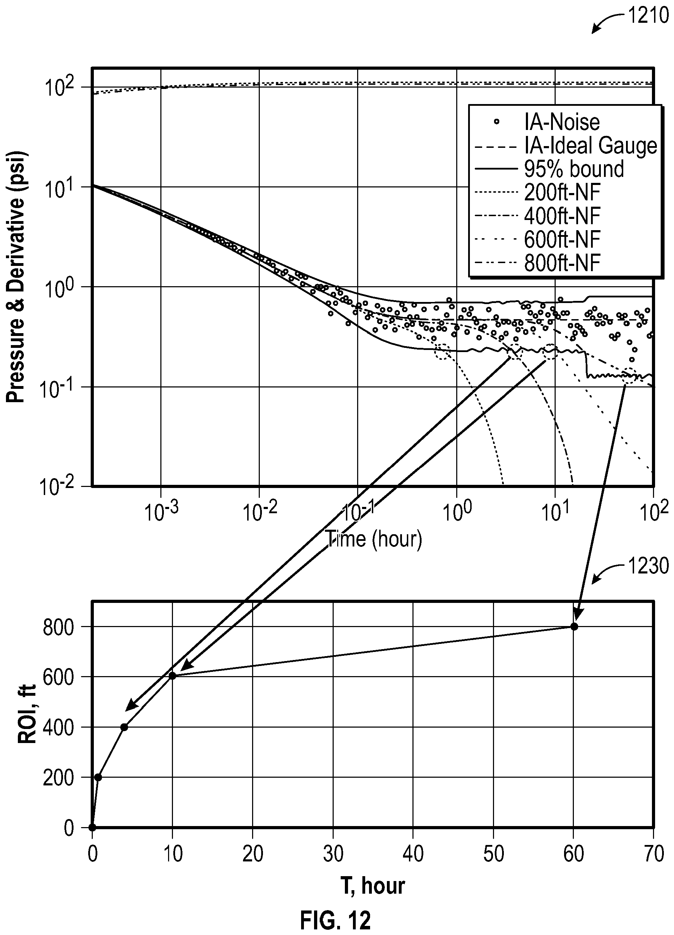

Fig. 12 shows an example plot 1210 and an example plot 1230 where the plot 1210 shows an infinite acting derivative bound and boundary model derivatives and where the plot 1230 shows a detectable ROI for each pumping period. In the example of Fig. 12, the plot 1210 corresponds to a circular no-flow boundary, which may be a selected type of boundary.

As illustrated in Fig. 12, for each distance, the time when the boundary derivative is out of the upper and/or lower bound is identified and the detectable ROI for each pumping period can be found via a plot of boundary distance versus time. As shown, the plot 1230 shows ROI in feet versus time in hours while the plot 1210 shows a 95% band where values can be discerned for crossings of the lower bound of the 95% band. As shown, one crossing is at approximately 4 hours (400 ft-NF (1 ft = 0.3048 m)), another crossing is at approximately 10 hours (600 ft-NF), and yet another crossing is at approximately 60 hours (800 ft-NF).

As mentioned, a method can include performing an uncertainty analysis or uncertainty analyses. For example, a workflow may assume that one or more formation parameters (e.g., one or more of horizontal permeability, vertical permeability, porosity, fluid viscosity, total compressibility, etc.) may be known with a relatively high precision where an ROI can be computed for the specific one or more formation parameters (e.g., a set of formation parameters). In various instances, however, in reality, rather than knowing precise values, one or more reasonable ranges may be known, for example, a reasonable range for one or more of the formation parameters. As an example, a method may include a number of precise values and a number of reasonable ranges. Where a reasonable range is present, an uncertainty analysis may be performed to determine how a distribution of formation parameters may be propagated to a result of a detectable ROI.

As an example, a method can include generating multi-realizations of formation parameters according to their distribution, and quantifying the uncertainty on ROI.

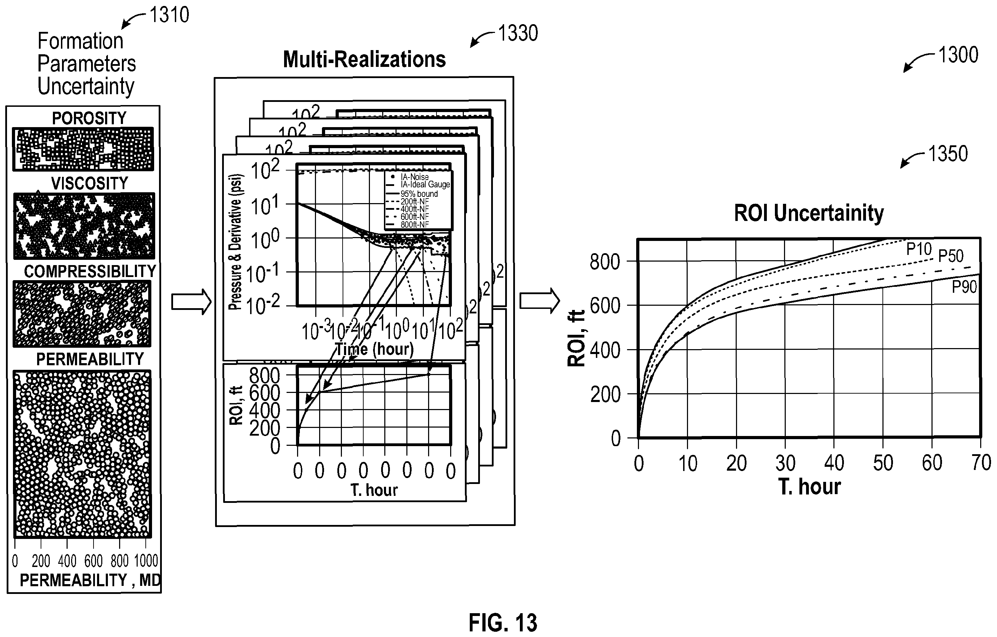

Fig. 13 shows an example of a method 1300 that includes a reception block 1310 for receiving uncertainty for various formation parameters, a generation block 1330 for generating a plurality of different realizations, and an output block 1350 for outputting ROI uncertainty. As an example, the method 1300 may be applied for one or more periods. For example, the method 1300 may be performed for each individual pumping period.

In the example of Fig. 13, the reception block 1310 may receive one or more uncertainties. For example, Fig. 13 shows uncertainties as to porosity, viscosity, compressibility and permeability. As to the generation block 1330, it can generate a desired number of realizations, which may number from two to one hundred or more. As shown, the output block 1350 may generate a plot of ROI uncertainty, for example, according to P-values (e.g., P10, P50, P90, Mean, etc.).

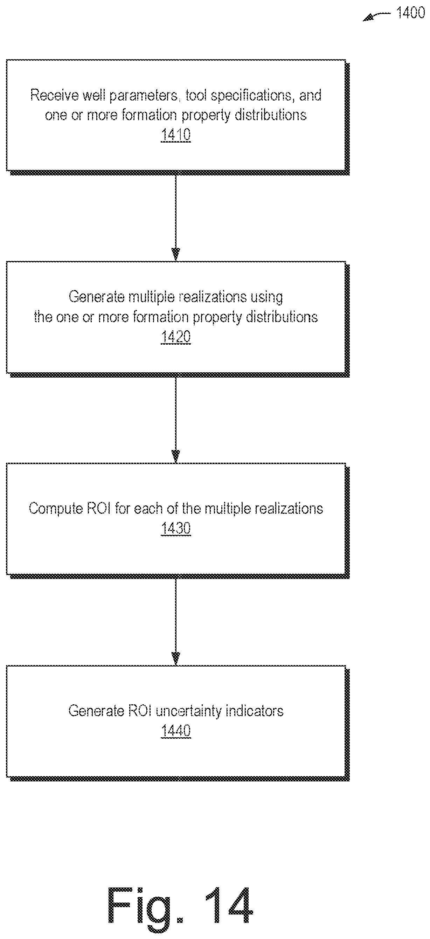

Fig. 14 shows an example of a method 1400 that includes a reception block 1410 for receiving well parameters, tool specifications, and one or more formation property distributions, a generation block 1420 for generating multiple realizations using the one or more formation property, a computation block 1430 for computing ROI for each of the multiple realizations, and a generation block 1440 for generating ROI uncertainty indicators based at least in part on the computed ROIs.

As an example, a method can include receiving and/or specifying well parameters (e.g., wellbore radius, inclination, etc.), tool dimension parameters (e.g., specifications and/or related information such as, for example, tool string configuration, inlet shapes, formation layer thickness, etc.), and one or more distributions of one or more formation parameters (e.g., one or more of horizontal permeability, vertical permeability, fluid viscosity, porosity, total compressibility, etc.).

As an example, a method can include generating multiple realizations using one or more formation property distributions. In such an example, one or more of various sampling methods may be utilized. For example, sampling can be performed directly using a naïve Monte Carlo simulation from a given distribution of each parameter of a corresponding number of one or more parameters. As another example, in the context of using analytical solutions to generate a pressure response, one or more formation parameters can form a reduced set or sets of parameters. In such an example, consider the following relationships (Biryukov, D., Kuchuk, F.J. (2015)):

$$ v = \sqrt{\frac{k_v}{k_h}} \frac{r_w}{l_w}, \qquad P_{factor} = 70.608367 \frac{q\mu}{k_h l_w}, \qquad t_{factor} = \frac{13652982.72}{3600} \frac{\emptyset\mu c_t r_w^2}{k_h} $$

where $k_h$ is horizontal permeability, $k_v$ is vertical permeability, $\mu$ is fluid viscosity, $\emptyset$ is porosity, $c_t$ is total compressibility, $r_w$ is wellbore radius and $l_w$ is inlet half length.

As an example, distribution(s) of formation parameters may form distribution(s) of reduced parameters (e.g., v, $P_{factor}$, $t_{factor}$) such that sampling may also be performed on the reduced parameters.

As an example, for each realization of formation parameters, a method can include performing an ROI computation (e.g., as described above, etc.). In such an example, an ROI curve can be computed. Where multiple realizations are generated, multi-realizations of formation parameters can yield to a set of ROI curves that can represent the ROI uncertainty propagated from the uncertainty of one or more of the formation parameters.

As mentioned, a method can include generating one or more uncertainty indicators. For example, consider P10, P50, P90, etc., which may be plotted and rendered to a display for visualization (e.g., as part of a graphical user interface). In such an example, one or more control actions may be issued responsive to one or more uncertainty indicators. For example, a control action may be improved by being based on a probabilistic determination related to formation characterization (e.g., ROI, etc.). As an example, a control action may be for an ongoing testing operation, for an injection operation, for a drilling operation, etc.

In the block 1350 of Fig. 13, values of ROI versus time are shown for P10, P50 and P90. As shown, P10 tends to be a higher ROI than P50 and P90 for given times; whereas, P90 provides the lowest ROI values with respect to time. As explained, such uncertainty indicators can be from multiple realizations that account for uncertainty in one or more parameters, which may be or include one or more formation parameters (e.g., porosity, viscosity, compressibility, permeability, etc.). As explained, a formation parameter may be relevant to one or more physical phenomena in a borehole and/or a formation (e.g., a reservoir, etc.). As such, a drawdown process and/or a build-up process can depend on a value or values, a range or ranges, etc., of one or more formation parameters. In various instances, noise may depend on one or more formation parameter values. For example, tidal noise may depend on porosity as a lower porosity may act to damp tidal effect.

Assuming one-dimensional flow in a nonleaky confined reservoir, that can be in fluid communication by directly abutting a tidal body of water, amplitude of fluid fluctuation, $h_x$, at distance x from an outcrop (e.g., bank or shore) can be given by:

$$h_x = h_0 \exp(-x \; \mathrm{sqrt}(\pi S / t_0 T))$$

where $h_0$ is the amplitude of the tide, S is reservoir storativity, T is transmissivity, and $t_0$ is the tidal period.

An expression for the time lag, $t_L$, of a given peak or trough after it occurs in a tidal body of water can be as follows:

$$t_L = x \; \mathrm{sqrt}(t_0 S / 4\pi T)$$

When $t_L$, x and $t_0$ are known from observed data, it is possible to rearrange the previous equation to estimate the reservoir diffusivity:

$$T/S = (x/t_L)^2 \; (t_0 / 4\pi)$$

In such an example, an estimate of S may be utilized to determine T from the above equation.

A reservoir may be defined as a subsurface body of rock including sufficient porosity and permeability to store and transmit fluids. For example, sedimentary rocks can be reservoir rocks because as they can include more porosity than most igneous and metamorphic rocks and form under temperature conditions at which hydrocarbons can be preserved. A reservoir can be a physical component of a petroleum system.

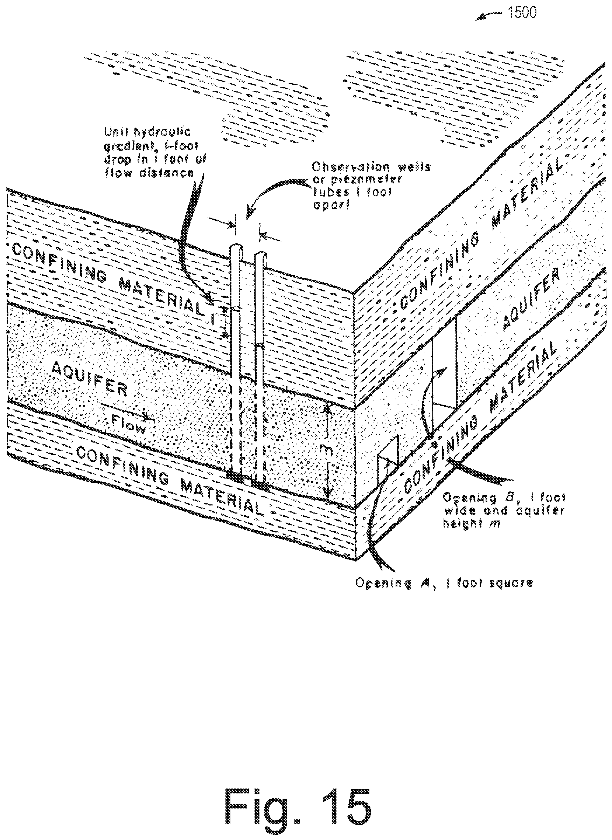

Fig. 15 shows an example of a geologic formation 1500 that includes an aquifer. An aquifer can be a body of rock whose fluid saturation, porosity and permeability permit production of groundwater. As an example, an aquifer can be a water-bearing portion of a petroleum reservoir with a waterdrive. As an example, an aquifer can be a water-bearing formation encountered while drilling. Drilling operations can be concerned about aquifers and may have to take certain actions (e.g., precautions, etc.) in design and execution of one or more operational plans (e.g., well plan, etc.), for example, to protect fresh water aquifers from contamination by wellbore fluids. In various instances, water in aquifers can flow into a wellbore, where the water may contaminate one or more drilling fluids, cause one or more well control problems, etc.

As an example, one or more methods, systems, etc., may be utilized for a reservoir that includes one or more types of fluid. For example, types of fluid can be hydrocarbon, water, and gas.

The term "hydraulic" may be applied to fluid other than water or fluid that includes water. Hydraulic conductivity is the rate of flow under a unit hydraulic gradient through a unit cross-sectional area of reservoir (see, e.g., opening A in Fig. 15). Transmissivity is the rate of flow under a unit hydraulic gradient through a unit width of a reservoir of thickness m (see, e.g., opening B in Fig. 15).

Hydraulic conductivity is a measure of a material's capacity to transmit water. It is defined as a constant of proportionality relating the specific discharge of a porous medium under a unit hydraulic gradient in Darcy's law:

$$v = -Ki$$

where v is specific discharge (L/T), K is hydraulic conductivity (L/T) and i is hydraulic gradient (dimensionless). The coefficient of permeability can be another term for hydraulic conductivity.

Note that hydraulic conductivity, which is a function of viscosity and density, can be a function of temperature; however, given a small range of temperature variation encountered in a formation, the temperature dependence of hydraulic conductivity may be neglected. Where temperature exceeds such a small range, it may be taken into account. For example, as mentioned, various systems may be suited for high pressure and high temperature (HPHT) types of operations that can be encountered in some formations.

Transmissivity is the rate of flow under a unit hydraulic gradient through a unit width of aquifer of given saturated thickness. The transmissivity of an aquifer can be related to its hydraulic conductivity as follows:

$$T = Kb$$

where T is transmissivity ($L^2/T$) and b is aquifer thickness (L).

As an example, an operation can include acquiring data where such data can be analyzed for one or more types of noise, for example, in a manner that can categorize and/or characterize noise. In such an example, the noise analysis may be utilized to instruct an ROI related workflow, for example, to account for one or more types of noise. In such an example, an ROI and/or ROI uncertainty indicator determination can be improved, which, in turn, can improve one or more operations that may include one or more downhole operations.

As an example, one or more simulations of a geologic formation may be performed based at least in part on an ROI and/or one or more values derived at least in part on an ROI (e.g., consider one or more sensor data-based values where an ROI is utilized for analyzing such one or more sensor data-based values as to an area, a volume, a boundary, etc.). In such an example, a more accurate ROI may improve the simulation of the geologic formation (e.g., consider a reservoir fluid flow simulation, a hydraulic fracturing simulation, etc.).

As mentioned, one type of noise can be tidal noise, which may depend on one or more factors. As an example, tidal noise may depend on whether a wellbore is in fluid communication, directly and/or indirectly, with an aquifer. As explained, geographic location, geologic location, etc., such as proximity to a large body of water (e.g., fresh, salt, etc.), may be a factor in tidal noise (e.g., magnitude of tidal effect, characteristics of tidal noise, etc.). As an example, an analysis of noise may provide for characterizing a formation. For example, an analysis of tidal noise may provide an indication as to whether or not an oil and/or gas reservoir is in fluid communication with an aquifer, a body of water, etc.

As an example, a formation may be characterized as include material that is isotropic and/or anisotropic. As an example, uncertainty in anisotropy may be represented using one or more distributions. As an example, anisotropy may be in one or more layers of a formation, which may be depended on how the formation developed on a geologic time scale. As an example, anisotropy may be characterized as being vertical and horizontal, which may be principal directions orthogonal to bedding and parallel to bedding, respectively. In various instances, vertical permeability may be several orders of magnitude smaller than horizontal permeability (e.g., consider a ratio called the KVKH-ratio, which may be part of a model). One source of $k_v < k_h$ anisotropy can be small scale heterogeneities. For example, as the nature of deposited material tend not to be constant over time, there can be, in a sandstone reservoir, a layered or semi-layered structure. In such an example, spatial frequency of these structures can vary, and can be as high as on the mm scale in the case of tidally influenced deposits. On larger scales (dm-m), both depositional and diagenetic processes may produce horizontal sheets of shales and cemented barriers that may restrict vertical flow. In contrast, in fractured reservoirs, a fracture direction can be vertical such that the permeability is largest in the vertical direction. As explained, a formation can be structured, for example, characterized by stratigraphy, lithology, etc., and can include various types of formation properties, which may be isotropic, anisotropic, etc. Further, a formation can be in fluid communication with one or more bodies of fluid, which may depend on structure, formation properties, geologic location, geographic location, etc. As an example, an ROI method may provide for characterizing a formation with respect to one or more factors (e.g., using pressure data, noise data, etc.). As explained, noise, uncertainty, etc., may be utilized in characterizing a formation.

As to test operations that can involve measuring one or more of pressure, flow, temperature, etc., consider one or more of a drawdown test, a buildup test, an interference test, an injection test and a falloff test, the latter two of which may be akin to drawdown and buildup tests for injectors.

As explained, a test can be a drillstem test (or drill stem test, abbreviated as DST). A DST can involve drawdown that may be performed, for example, in an exploration well, a newly drilled well, etc. A drawdown test can be performed for a static, stable and shut-in well that is opened to drawdown test flow. As explained, a drawdown test may aim to determine one or more of permeability of a drainage area, an estimate of skin, a pore volume, reservoir heterogeneity, etc. During a buildup test (or build-up test), a well which is already flowing can be shut in, and the downhole pressure is measured as the pressure builds up. As explained, a buildup test may aim to determine one or more of permeability, skin, an initial reservoir pressure during a transient state, an average reservoir pressure over a drainage area during pseudo-steady state, etc.

In an injection test, a static, stable and shut-in well can be opened to fluid injection (e.g., water, etc.) such that flow is into the well. An injection test may aim to map the injected fluid. As to a pressure falloff test, a well already injected can be shut in, and the pressure drop during the falloff period measured as the pressure declines.

As an example, a method can include computing ROI based on a deviation in downhole pressure and/or pressure changes at a wellbore. In such an example, consider a definition that a feature at a distance $R_{end}$ can be detected if there is a measurable deviation in the pressure change ($\Delta P = P_0 - P$) in the wellbore from baseline due to the presence of a feature at $R_{end}$, baseline being the pressure ($P_{IA}$) or change in pressure ($\Delta P_{IA}$) in an infinite acting reservoir. In such an example, $\Delta P$ and $\Delta P_{IA}$ can be computed analytically for simple reservoirs or can be computed numerically for larger-scale and/or more complex reservoirs using one or more reservoir simulators (e.g., INTERSECT simulator, ECLIPSE simulator, etc.).

As an example, consider, as a reference, a definition as follows $\Delta\Delta P = \Delta P - \Delta P_{IA}$ as a deviation in $\Delta P$ from $\Delta P_{IA}$. In such an example, measurability can be a default and/or a user-prescribed threshold value, which may depend on the apparent resolution of a gauge used or planned to be used for measurement.

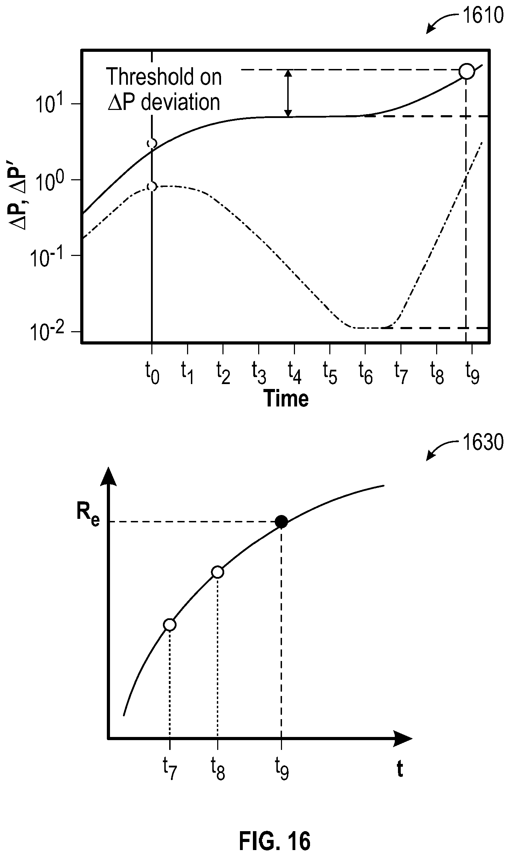

Fig. 16 shows example plots 1610 and 1630 where $\Delta P$ and $\Delta P'$ correspond to baseline (dashed lines) and a circular boundary at a distance $R_{end}$. In the plot 1610, the deviation from baseline is related to feature detection time and its sensitivity to prescribed threshold value. While there may be observable deviation from baseline, it may not be detectable if the change is below a prescribed threshold value.

As shown in Fig. 16, the deviation in $\Delta P$ from baseline relative to a prescribed threshold value is linked to feature detection times. For instance, although the deviation in $\Delta P$ from baseline due to the presence of a feature at $R_{end}$ can be observed visibly at t= t6 hour in the plot 1630, the feature can be detected by the gauge at t= t9 because the magnitude of the deviation from baseline is below the threshold value specified. Such an approach may be generalized for computing ROI and corresponding detection times for a given boundary system by varying potential feature locations while keeping the rest of the input parameters the same.

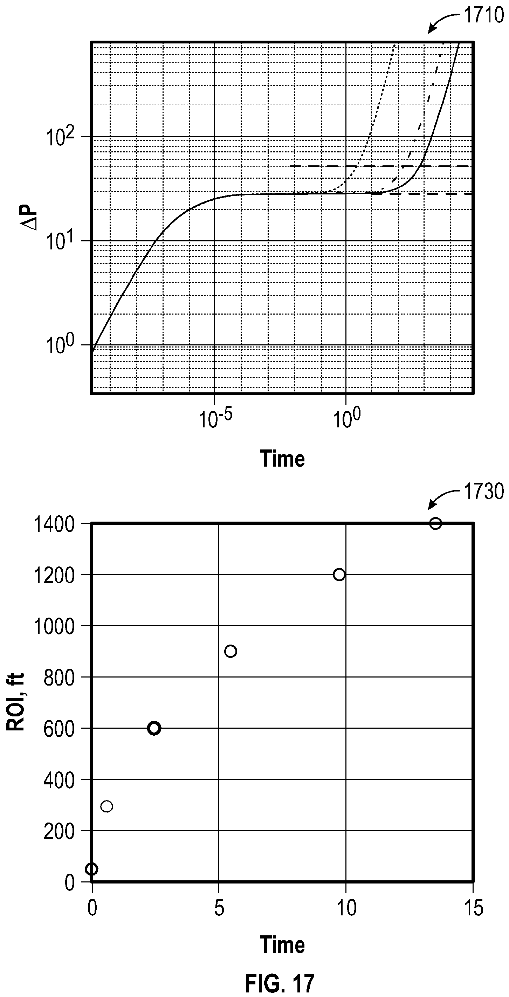

Fig. 17 shows example plots 1710 and 1730, where pressure changes at the borehole cause by circular features located at various distances away from the wellbore (plot 1710) and times corresponding to the detections of the features (plot 1730) at the wellbore.

As an example, a method may be applicable to one or more drawdown and/or build-up cycles, an entire pumping history, etc. As an example, a method can analyze the deviation in pressure from baseline for an entire pumping history and use the pressure deviation from IA reservoir to determine the time at which the presence of a boundary causes pressure change in the wellbore that is above threshold value prescribed.

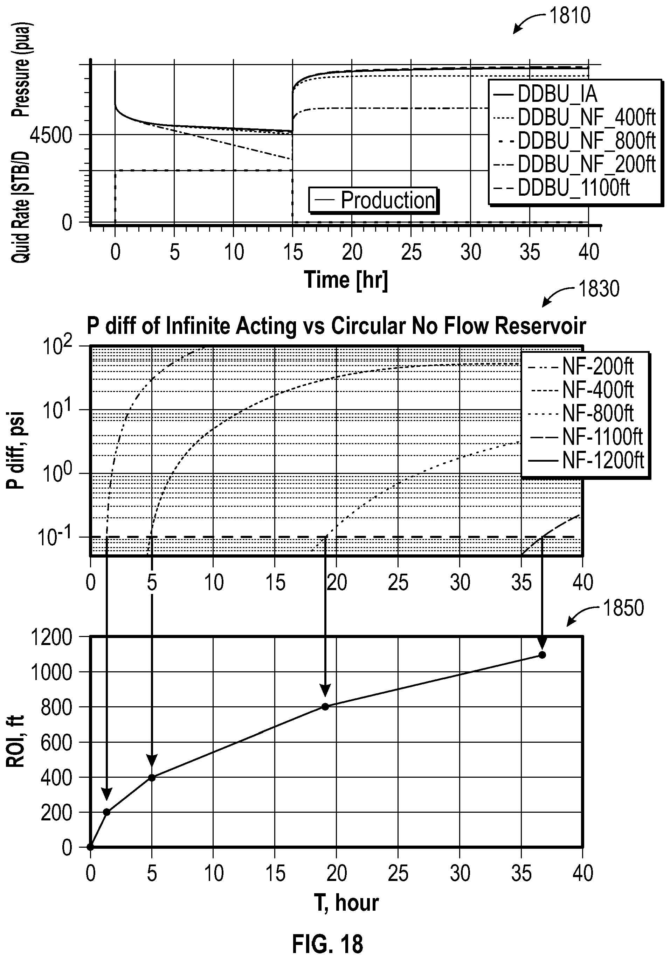

Fig. 18 shows example plots 1810, 1830 and 1850 that illustrate how pressure difference for an entire pumping history can be utilized in feature detection. The plot 1810 shows downhole pressure during drawdown and build-up cycles for finite and infinite boundary models. The plot 1830 shows the pressure difference from the baseline when the formation has circular boundaries at 200 ft, 400 ft, 800 ft, 1100 ft or 1200 ft. The plot 1850 shows the feature detection times and the corresponding feature location based on data in the plot 1830.

As shown in Fig. 18, the plot 1810 shows the pressure profiles during drawdown and build-up cycles, the plot 1830 shows the corresponding deviation in pressure from IA reservoir due to having no-flow boundaries at 200 ft, 400 ft, 800 ft, or 1100 ft. And, as shown in the plot 1850, the time at which the presence of no-flow boundary can be detected can be displayed as ROI versus time.

The method as illustrated in Fig. 18 can honor, for example, tool geometry, operational choices (e.g., flow rates, drawdown and build-up times, probe location), and anisotropic permeability.

As to uncertainty due to noise and/or error in measurements and its quantification, a method can include, for example, considering one or more of various types of noise. For example, various types of noise with varying magnitudes can change the amplitude of pressure signals giving rise to inaccurate formation characterizations and predictions.

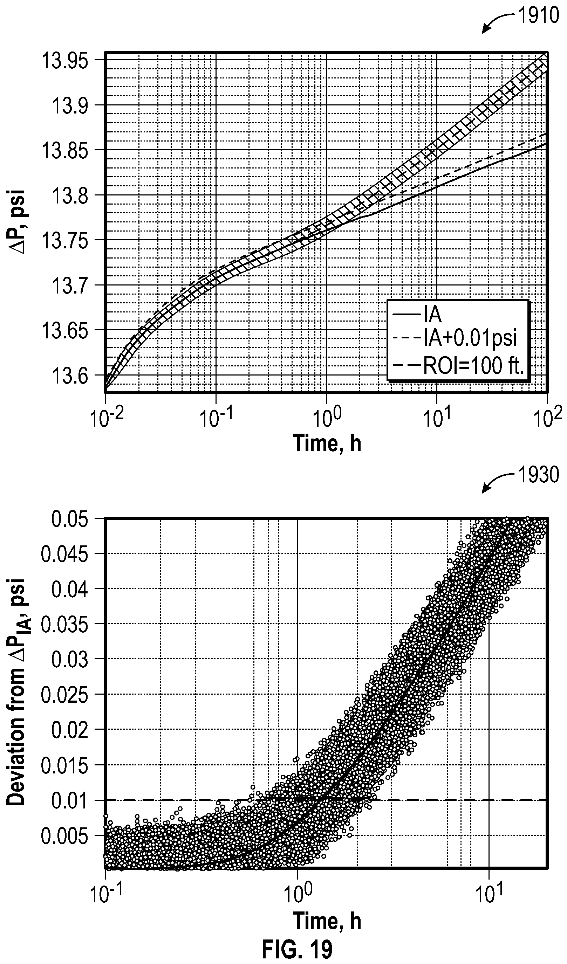

Fig. 19 shows example plots 1910 and 1930 where the plot 1910 shows pressure changes at the wellbore from infinite acting due to the presence of a circular boundary at 100 ft where a red dashed line indicates the threshold deviation in $\Delta P$ from IA reservoir and where the plot 1930 shows pressure deviation from an infinite acting system where pressure deviates from IA reservoir not at a single point of time; rather, in an interval of time, which reflects an effect of uncertainty in pressure deviation due to noise.

As explained, Fig. 19 shows a schematic of noisy downhole pressure deviation from infinite acting reservoir for a reservoir that has the same formation properties but has a circular boundary at 100 ft. In this case, the deviation in pressure from IA reservoir (infinite acting reservoir) is no longer at a single point of time but at multiple points, which reflects the effect of the uncertainty in ROI due to the presence of noise.

As an example, a method can consider one or more of drift, creep, and offset noise models (see, e.g., Ramakrishnan et al., 2020) and lunar tidal effect in the form of:

$$\epsilon_{tidal} = E_t\,X_t\,\cos\frac{\pi(t-Y_t)}{6}, X_t{\sim}U(0,1), Y_t{\sim}U(0,1)$$

where Et is the standard deviation in the magnitude of tidal noise, $X_t$ and $Y_t$ can be uniform distributions with zero mean and standard deviation of unity.

In such an approach, one or more other noises, additionally or alternatively, may be considered and/or one or more other noise models, additionally or alternatively, may be considered.

As an example, a method can include inferring various reservoir and rock properties well logs and/or low-resolution surface measurements that can have large measurement and interpretation errors. As explained, error in measurements can be an additional uncertainty in pressure deviations computations akin to the one by gauge noise that can further enlarge the confidence interval of feature detection times. Thus, prediction of ROI can include uncertainty inherited from the uncertainty due to gauge noise and error in formation properties. To compute ROI more reliably and make informed decision for reserve volume, uncertainty in formation properties can be accounted for in ROI computations.

Uncertainty in formation properties such as $\phi$, $\mu$, $c_T$, $k_v$(vertical permeability), and $k_h$(horizontal permeability) as well as h (formation thickness) and probe locations can be explored by distributions of these parameters. The distributions of input parameters can be propagated to pressure deviations and multi-realizations of pressure deviations in the wellbore can be generated. Next, a change in pressure due to gauge noise and lunar tide can be added to the multi-realizations of pressure changes. In a process of propagating uncertainty due to error in measurements and noise, a method can generate multi-realizations of pressure responses to explore and quantify the uncertainty on ROI.

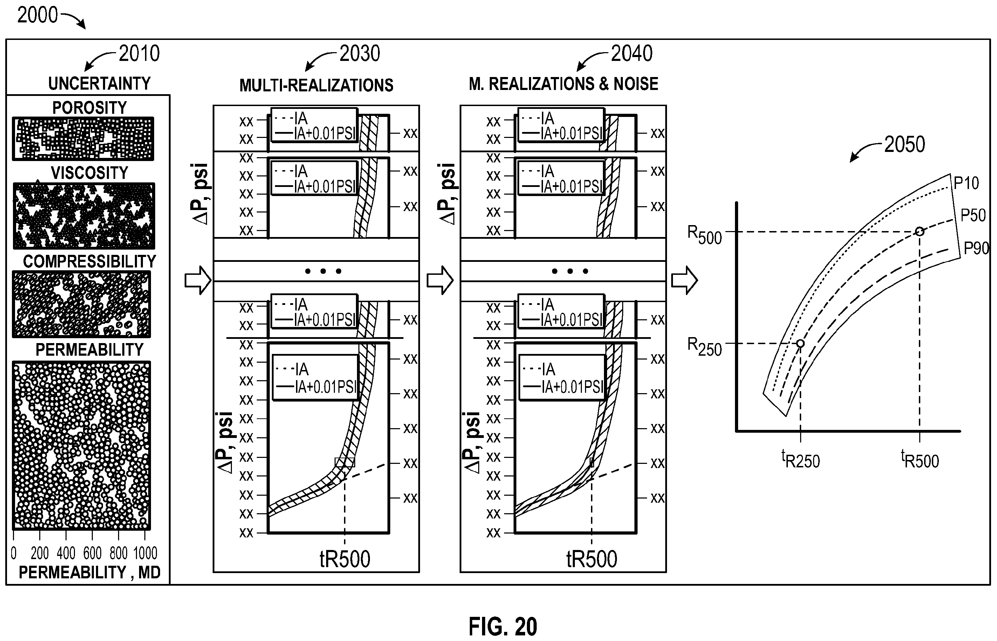

Fig. 20 shows an example of a method 2000 that includes a reception block 2010 for receiving uncertainty information for one or more formation properties, a generation block 2030 for generating multiple realizations using the uncertainty information, a generation block 2040 for generating multiple realizations with noise, and an output block 2050 for outputting uncertainty indicators (see, e.g., P10, P50, and P90).

As explained, a method can include receiving and/or specifying formation and tool dimensions (e.g., thickness, probe locations, dimensions of slots, etc.), gauge properties, operational parameter(s) such as drawdown rate and time, build-up time, and anticipated boundary type (fault, circular closed boundary, channel, etc.). Such a method can include providing mean values ($\mu_x$) of formation properties such as, for example, permeabilities, porosity, viscosity, and compressibility, and associated errors in terms of fractions (f). In such an example, based on the mean values of the properties together with the corresponding fractions of errors provided, equiprobable distributions of each property can be generated:

$$X = (1 - f)\mu_x + 2Sf\mu_x$$

where S is a distribution of random numbers obtained via Latin hypercube sampling ensuring the sampling of the parameters consistent with the assumed distribution of formation parameters.

As an example, deviations in pressure from an infinite acting media model, $\Delta\Delta P$, can be computed for a specified system and location. Such computations can be analytical for simple reservoirs or numerical for large-scale reservoirs (e.g., using one or more reservoir simulators for more complex reservoirs). In the process of propagating the uncertainty in formation parameters to ROI, a method can include generating multi-realizations of pressure deviations from baseline corresponding to the distributions of formation properties (X). Next, distributions of different source of noises (e.g., drift, creep, tidal, offset noises, etc.) can be generated using models previously defined or other models as may be available, which can be added to multi-realizations of pressure deviations corresponding to X (see, e.g., the method 2000 of Fig. 20).

As an example, a method can include computing feature prediction times based on multi-realizations of $\Delta\Delta P$ due to noise and error in measurements, for example, to yield a set of ROI curves representing the propagated uncertainty due to different source of noise and error in measurements.

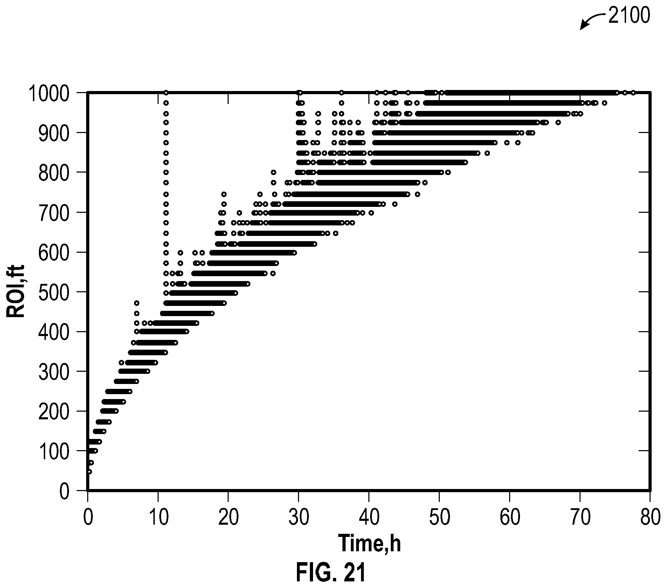

Fig. 21 shows an example plot 2100 of ROI versus time that shows how the uncertainty due to noise and error in measurement can affect ROI.

As an example, computed feature prediction times corresponding to a particular feature location can be utilized for selecting P10, P50 and P90 of prediction times to identify different probabilities of radius of investigation (ROI) given the uncertainty due to noise and error in measurement. Alternatively, a method can include selecting $\Delta\Delta P_{P10}$, $\Delta\Delta P_{P50}$, and $\Delta\Delta P_{P90}$, which can represent P10, P50, and P90 of $\Delta\Delta P$ respectively, and use $\Delta\Delta P_{P10}$, $\Delta\Delta P_{P50}$, and $\Delta\Delta P_{P90}$ to compute the time at which the feature causes a measurable deviation in the wellbore pressure due to a feature at r = $R_{end}$.

As an example, a method can include repeating computations of P10, P50, and P90 for various features locations to obtain a plot of ROI versus time in terms of P10, P50, and P90.

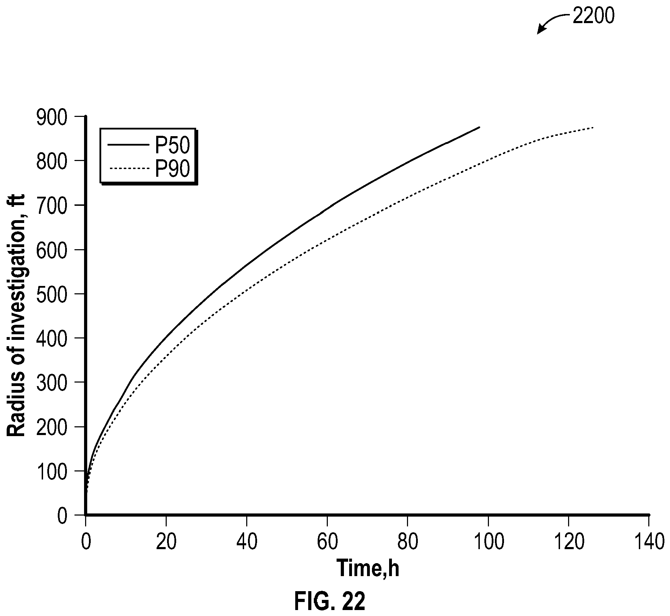

Fig. 22 shows an example plot 2200 of ROI versus time for probabilistic ROI versus feature detection times for given locations in a circular system for quantifying uncertainty due to error in measurements and noise where a red, upper curve is for P50 and where a green, lower curve is for P90.

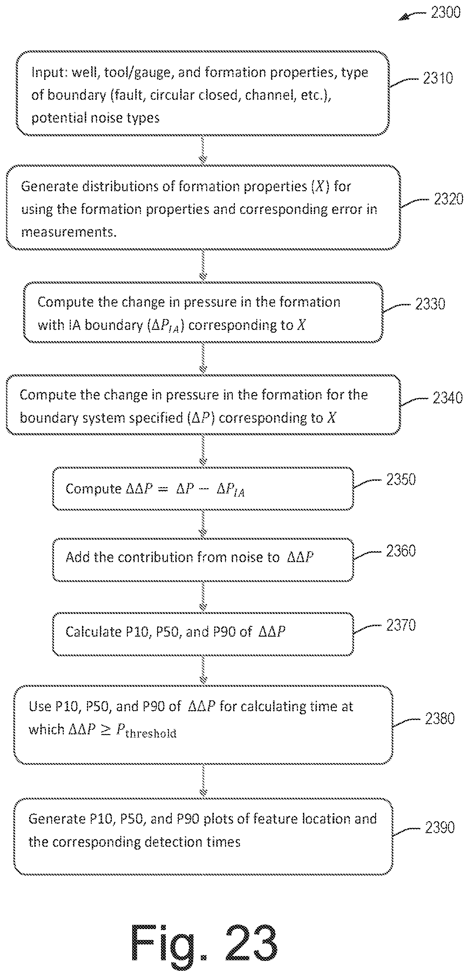

Fig. 23 shows an example of a method 2300 that includes a reception block 2310 for receiving well, tool/gauge, formation properties, type of boundary (e.g., fault, circular closed, channel, etc.), and one or more potential noise types; a generation block 2320 for generating distributions of formation properties for using the formation properties, X, and corresponding error in measurements; a computation block 2330 for computing the change in pressure in the formation with an infinite acting (IA) boundary ($\Delta P_{IA}$) corresponding to X; a computation block for computing the change in pressure in the formation for the boundary system specified ($\Delta P$) corresponding to X; a computation block 2350 for computing $\Delta\Delta P$ (e.g., as $\Delta P - \Delta P_{IA}$); an addition block 2360 for adding the contribution from noise to $\Delta\Delta P$; a calculation block 2370 for calculating one or more of P10, P50, and P90 of $\Delta\Delta P$; a calculation block 2380 for using the P10, P50 and/or P90 of $\Delta\Delta P$ for calculating time at which $\Delta\Delta P$ is greater than or equal to a threshold $P_{threshold}$; and a generation block 2390 for generating P10, P50 and/or P90 plots of feature location and the corresponding detection times.

As explained, a method can include utilizing one or more techniques for computation (e.g., prediction, etc.) of a radius of investigation for one or more tools (e.g., deep transient testing tools, etc.) based on one or more definitions of ROI. As explained, a method can include utilizing, for example, one or more of tool metrology, anisotropy in formation properties, and drawdown rates. As an example, a workflow can account for an anticipated tool and background noise as well as uncertainty in one or more formation properties. As an example, uncertainty due to noise and error in measurements can be propagated to quantify uncertainty on ROI estimation. A workflow can be flexible for conducting ROI per drawdown or build-up cycle or utilizing an entire pumping history (e.g., in a single computation). As an example, a workflow can provide output suitable for making one or more informed decisions on test design under noisy and uncertain formation conditions.

As an example, a method can include receiving sensor data acquired using one or more downhole tool pressure gauges disposed in a borehole in a geologic formation responsive to a fluid operation, where the geologic formation includes a reservoir; and, for the fluid operation, using at least an infinite acting model, determining a distance of pressure influence in the geologic formation. In such an example, the distance of pressure influence in the geologic formation can correspond to a time. For example, consider a time of the fluid operation.

As an example, a distance of pressure influence can correspond to a feature of a geologic formation and a location of the feature with respect to a borehole where a fluid operation is being performed or has been performed. In such an example, the feature can cause a measurable deviation in sensor data with respect to data of an infinite acting model.

As an example, a fluid operation can include at least one drawdown period, at least one build-up period or at least one drawdown and build-up cycle.

As an example, a method can include receiving formation properties, where an infinite acting model utilizes the formation properties. Such a method can also include, for at least one of the formation properties, receiving uncertainty information. In such an example, the uncertainty information can include at least one range and/or at least one distribution.

As an example, a method can include using at least an infinite acting model in combination with at least one noise model for determining a distance of pressure influence in the geologic formation. In such an example, the at least one noise model can include or can be a pressure gauge noise model. As an example, a method can include determining a distance that depends at least in part on pressure gauge resolution.

As an example, a method can include utilizing a derivative noise envelope to discern a time when a derivative deviates from an infinite acting flow due to presence of a boundary. In such an example, the method can include generating the derivative noise envelope using a Bourdet derivative. As an example, a time that is discerned from a deviation can correspond to a distance of pressure influence.

As an example, a distance of pressure influence can be or correspond to a radius of investigation.

As an example, a method can include utilizing an infinite acting model with noise and without noise, generating a derivative of the infinite acting model and a derivative envelope, and generating boundary model derivatives. In such an example, a Bourdet derivative technique may be utilized for generating one or more derivatives.

As an example, a method can include receiving sensor data acquired using one or more downhole tool pressure gauges disposed in a borehole in a geologic formation responsive to a fluid operation, where the geologic formation includes a reservoir; for the fluid operation, using at least an infinite acting model, determining a distance of pressure influence in the geologic formation; and, based at least in part on the distance of pressure influence, issuing a control signal to control the fluid operation. For example, such a control signal may be to continue the fluid operation or to cease the fluid operation. As an example, a system may include one or more downhole components that can operate responsive to one or more control signals, which may be from an external source and/or from an internal source. In such an example, the system can include a processor, memory and processor-executable instructions in the memory along with a sensor data interface, which may receive pressure gauge data as sensor data. In such an example, the system can process the sensor data to determine one or more operational parameters of a fluid operation performed by the system. For example, consider an operational parameter that can terminate and/or time the termination of a fluid related activity of the system. As an example, where a feature is located in a geologic formation, it may represent a boundary for pressure influence. A fluid operation may operate for a period of time where further operation may be limited as to value of data acquired by the further operation. In such an example, the fluid operation, as performed by a system, may automatically schedule a termination time and/or terminate such that the fluid operation is optimized for purposes of data acquisition for characterizing the geologic formation.

As an example, a system can include a processor; memory accessible to the processor; processor-executable instructions stored in the memory, executable to instruct the system to: receive sensor data acquired using one or more downhole tool pressure gauges disposed in a borehole in a geologic formation responsive to a fluid operation, where the geologic formation includes a reservoir; and, for the fluid operation, using at least an infinite acting model, determine a distance of pressure influence in the geologic formation.

As an example, one or more computer-readable storage media can include processor-executable instructions, executable to instruct a computing system to: receive sensor data acquired using one or more downhole tool pressure gauges disposed in a borehole in a geologic formation responsive to a fluid operation, where the geologic formation includes a reservoir; and, for the fluid operation, using at least an infinite acting model, determine a distance of pressure influence in the geologic formation. A computer-readable storage medium is a device that is tangible, non-transitory, not a signal and not a carrier wave. Such a device can be utilized to store instructions and/or data (e.g., one or more of sensor data, specification data, formation property data, etc.).

As an example, a computer program product can include processor-executable instructions to instruct a computing system. Such a product may be utilized by a computing device, a computing system, etc., to perform a method, for example, consider one or more of the methods described herein.

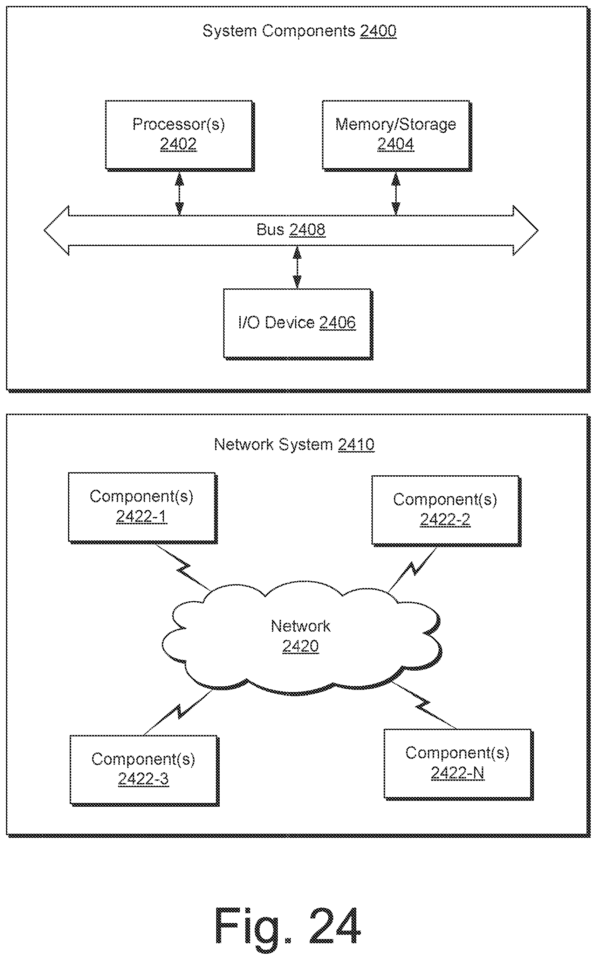

Fig. 24 shows components of an example of a computing system 2400 and an example of a networked system 2410, which may be utilized to perform a method, to form a specialized system, etc. The system 2400 includes one or more processors 2402, memory and/or storage components 2404, one or more input and/or output devices 2406 and a bus 2408. In an example embodiment, instructions may be stored in one or more computer-readable media (e.g., memory/storage components 2404). Such instructions may be read by one or more processors (e.g., the processor(s) 2402) via a communication bus (e.g., the bus 2408), which may be wired or wireless. The one or more processors may execute such instructions to implement (wholly or in part) one or more attributes (e.g., as part of a method). A user may view output from and interact with a process via an I/O device (e.g., the device 2406). In an example embodiment, a computer-readable medium may be a storage component such as a physical memory storage device, for example, a chip, a chip on a package, a memory card, etc. (e.g., a computer-readable storage medium).

In an example embodiment, components may be distributed, such as in the network system 2410. The network system 2410 includes components 2422-1, 2422-2, 2422-3, . . . 2422-N. For example, the components 2422-1 may include the processor(s) 2402 while the component(s) 2422-3 may include memory accessible by the processor(s) 2402. Further, the component(s) 2402-2 may include an I/O device for display and optionally interaction with a method. The network 2420 may be or include the Internet, an intranet, a cellular network, a satellite network, etc.

As an example, a device may be a mobile device that includes one or more network interfaces for communication of information. For example, a mobile device may include a wireless network interface (e.g., operable via IEEE 802.11, ETSI GSM, BLUETOOTH, satellite, etc.). As an example, a mobile device may include components such as a main processor, memory, a display, display graphics circuitry (e.g., optionally including touch and gesture circuitry), a SIM slot, audio/video circuitry, motion processing circuitry (e.g., accelerometer, gyroscope), wireless LAN circuitry, smart card circuitry, transmitter circuitry, GPS circuitry, and a battery. As an example, a mobile device may be configured as a cell phone, a tablet, etc. As an example, a method may be implemented (e.g., wholly or in part) using a mobile device. As an example, a system may include one or more mobile devices.

As an example, a system may be a distributed environment, for example, a so-called "cloud" environment where various devices, components, etc. interact for purposes of data storage, communications, computing, etc. As an example, a device or a system may include one or more components for communication of information via one or more of the Internet (e.g., where communication occurs via one or more Internet protocols), a cellular network, a satellite network, etc. As an example, a method may be implemented in a distributed environment (e.g., wholly or in part as a cloud-based service).

As an example, information may be input from a display (e.g., consider a touchscreen), output to a display or both. As an example, information may be output to a projector, a laser device, a printer, etc. such that the information may be viewed. As an example, information may be output stereographically or holographically. As to a printer, consider a 2D or a 3D printer. As an example, a 3D printer may include one or more substances that can be output to construct a 3D object. For example, data may be provided to a 3D printer to construct a 3D representation of a subterranean formation. As an example, layers may be constructed in 3D (e.g., horizons, etc.), geobodies constructed in 3D, etc. As an example, holes, fractures, etc., may be constructed in 3D (e.g., as positive structures, as negative structures, etc.).

Although only a few examples have been described in detail above, those skilled in the art will readily appreciate that many modifications are possible in the examples. Accordingly, all such modifications are intended to be included within the scope of this disclosure as defined in the following claims.

## Claims

1. A computer-implemented method for performing a fluid operation comprising:

   receiving sensor data acquired using one or more downhole tool pressure gauges disposed in a borehole in a geologic formation responsive to a fluid operation, wherein the geologic formation comprises a reservoir; and
   for the fluid operation, using at least an infinite acting model, determining a distance of pressure influence in the geologic formation, wherein the infinite acting model is a boundary-less model such that a boundary does not impact or otherwise limit a radius of investigation, ROI, with respect to time, wherein the ROI is a radius within which pressure in the geologic formation is influenced by the fluid operation,
   **characterized in that**
   the determining comprises utilizing a derivative noise envelope to discern a time when a derivative deviates from an infinite acting flow due to presence of a boundary.

2. The method of claim 1, wherein the distance of pressure influence in the geologic formation corresponds to a time and wherein the time is a time of the fluid operation.

3. The method of claim 1, wherein the distance of pressure influence corresponds to a feature of the geologic formation and a location of the feature with respect to the borehole, wherein the feature causes a measurable deviation in the sensor data with respect to data of the infinite acting model.

4. The method of claim 1, wherein the fluid operation comprises at least one drawdown period, at least one build-up period or at least one drawdown and build-up cycle.

5. The method of claim 1, comprising receiving formation properties, wherein the infinite acting model utilizes the formation properties and comprising, for at least one of the formation properties, receiving uncertainty information.

6. The method of claim 5, wherein the uncertainty information comprises at least one range or at least one distribution.

7. The method of claim 1, comprising using at least the infinite acting model in combination with at least one noise model for determining the distance of pressure influence in the geologic formation, wherein the at least one noise model comprises a pressure gauge noise model.

8. The method of claim 1, wherein the determining depends at least in part on pressure gauge resolution.

9. The method of claim 1, comprising generating (820) the derivative noise envelope using a Bourdet derivative.

10. The method of claim 1, wherein the time corresponds to the distance of pressure influence, wherein the distance of pressure influence is a radius of investigation.

11. The method of claim 1, wherein the determining comprises utilizing the infinite acting model with noise and without noise, generating (820) a derivative of the infinite acting model and a derivative envelope, and generating (830) boundary model derivatives.

12. The method of claim 1, comprising, based at least in part on the distance of pressure influence, issuing a control signal to control the fluid operation.

13. A system comprising:

a processor (2402);
memory (2422-3) accessible to the processor (2402);
processor-executable instructions stored in the memory (2422-3), executable to instruct the system to perform the steps of the method of any preceding claim.

14. One or more computer-readable storage media comprising processor-executable instructions, executable to instruct a computing system to perform the steps of the method of any of claims 1 to 12.


**Patentansprüche**

1. Computerimplementiertes Verfahren zum Durchführen eines Fluidvorgangs, umfassend:

Empfangen von Sensordaten, die unter Verwendung eines oder mehrerer Bohrlochwerkzeugdruckmessgeräte erfasst werden, die in einer Bohrung in einer geologischen Formation angeordnet sind, die auf einen Fluidvorgang ansprechen, wobei die geologische Formation eine Lagerstätte umfasst; und
für den Fluidvorgang unter Verwendung mindestens eines unendlich wirkenden Modells, Bestimmen einer Entfernung eines Druckeinflusses in der geologischen Formation, wobei das unendlich wirkende Modell derart ein grenzenloses Modell ist, dass eine Grenze einen Untersuchungsradius, ROI, hinsichtlich einer Zeit nicht beeinträchtigt oder anderweitig einschränkt, wobei der ROI ein Radius ist, innerhalb dessen ein Druck in der geologischen Formation durch den Fluidvorgang beeinflusst wird, **dadurch gekennzeichnet, dass** das Bestimmen ein Nutzen einer Derivatrauschhüllkurve umfasst, um eine Zeit zu erkennen, wenn ein Derivat von einer unendlich wirkenden Strömung aufgrund einer Anwesenheit einer Grenze abweicht.

2. Verfahren nach Anspruch 1, wobei die Entfernung des Druckeinflusses in der geologischen Formation einer Zeit entspricht und wobei die Zeit eine Zeit des Fluidvorgangs ist.

3. Verfahren nach Anspruch 1, wobei die Entfernung des Druckeinflusses einem Merkmal der geologischen Formation und einer Stelle des Merkmals hinsichtlich der Bohrung entspricht, wobei das Merkmal eine messbare Abweichung in den Sensordaten hinsichtlich des unendlich wirkenden Modells bewirkt.

4. Verfahren nach Anspruch 1, wobei der Fluidvorgang mindestens eine Absenkperiode, mindestens eine Aufbauperiode oder mindestens einen Absenk- und Aufbauzyklus umfasst.

**5.** Verfahren nach Anspruch 1, umfassend das Empfangen von Formationseigenschaften, wobei das unendlich wirkende Modell die Formationseigenschaften nutzt und umfassend, für mindestens eine der Formationseigenschaften, das Empfangen von Unsicherheitsinformationen.

**6.** Verfahren nach Anspruch 5, wobei die Unsicherheitsinformationen mindestens einen Bereich oder mindestens eine Verteilung umfassen.

**7.** Verfahren nach Anspruch 1, umfassend das Verwenden von mindestens dem unendlich wirkenden Modell in Kombination mit mindestens einem Rauschmodell zum Bestimmen der Entfernung des Druckeinflusses in der geologischen Formation, wobei das mindestens eine Rauschmodell ein Druckmessgerätrauschmodell umfasst.

**8.** Verfahren nach Anspruch 1, wobei das Bestimmen mindestens teilweise von einer Druckmessgerätauflösung abhängt.

**9.** Verfahren nach Anspruch 1, umfassend ein Erzeugen (820) der Derivatrauschhüllkurve unter Verwendung eines Bourdet-Derivats.

**10.** Verfahren nach Anspruch 1, wobei die Zeit der Entfernung des Druckeinflusses entspricht, wobei die Entfernung des Druckeinflusses ein Untersuchungsradius ist.

**11.** Verfahren nach Anspruch 1, wobei das Bestimmen das Nutzen des unendlich wirkenden Modells mit einem Rauschen und ohne Rauschen, das Erzeugen (820) eines Derivats des unendlich wirkenden Modells und einer Derivathüllkurve und das Erzeugen (830) von Grenzmodellderivaten umfasst.

**12.** Verfahren nach Anspruch 1, umfassend, basierend mindestens teilweise auf der Entfernung des Druckeinflusses, ein Ausgeben eines Steuersignals, um den Fluidvorgang zu steuern.

**13.** System, umfassend:

einen Prozessor (2402);
einen Speicher (2422-3) der dem Prozessor (2402) zugänglich ist;
prozessorausführbare Anweisungen, die in dem Speicher (2422-3) gespeichert sind, die ausführbar sind, um das System anzuweisen, die Schritte des Verfahrens nach einem der vorstehenden Ansprüche durchzuführen.

**14.** Ein oder mehrere computerlesbare Speicherungsmedien, umfassend prozessorausführbare Anweisungen, die ausführbar sind, um ein Computersystem anzuweisen, die Schritte des Verfahrens nach einem der Ansprüche 1 bis 12 durchzuführen.

**Revendications**

**1.** Procédé mis en œuvre par ordinateur permettant de réaliser une opération de fluide comprenant :

la réception de données de capteur acquises à l'aide d'un ou plusieurs manomètres d'outil fond de trou disposés dans un trou de forage dans une formation géologique en réponse à une opération de fluide, dans lequel la formation géologique comprend un réservoir ; et
pour l'opération de fluide, à l'aide d'au moins un modèle à régime infini, la détermination d'une distance d'influence de pression dans la formation géologique, dans lequel le modèle à régime infini est un modèle sans limite de telle sorte qu'une limite n'a pas d'impact ou limite autrement un rayon d'étude, ROI, par rapport à un moment, dans lequel le ROI est un rayon à l'intérieur duquel une pression dans la formation géologique est influencée par l'opération de fluide, **caractérisé en ce que**
la détermination comprend l'utilisation d'une enveloppe de bruit de dérivée afin d'identifier un moment auquel une dérivée s'écarte d'un flux à régime infini en raison de la présence d'une limite.

**2.** Procédé selon la revendication 1, dans lequel la distance d'influence de pression dans la formation géologique correspond à un moment et dans lequel le moment est un moment de l'opération de fluide.

**3.** Procédé selon la revendication 1, dans lequel la distance d'influence de pression correspond à une caractéristique de la formation géologique et à un emplacement de la caractéristique par rapport au trou de forage, dans lequel la caractéristique provoque un écart mesurable dans les données du capteur par rapport à des données du modèle à régime infini.

4. Procédé selon la revendication 1, dans lequel l'opération de fluide comprend au moins une période de dépression, au moins une période de remontée de pression ou au moins un cycle de dépression et de remontée de pression.

5. Procédé selon la revendication 1, comprenant la réception de propriétés de formation, dans lequel le modèle à régime infini utilise les propriétés de formation et comprenant, pour au moins l'une parmi les propriétés de formation, la réception d'informations d'incertitude.

6. Procédé selon la revendication 5, dans lequel les informations d'incertitude comprennent au moins une plage ou au moins une distribution.

7. Procédé selon la revendication 1, comprenant l'utilisation d'au moins le modèle à régime infini en combinaison avec au moins un modèle de bruit pour déterminer la distance d'influence de pression dans la formation géologique, dans lequel l'au moins un modèle de bruit comprend un modèle de bruit de manomètre.

8. Procédé selon la revendication 1, dans lequel la détermination dépend, au moins en partie, de la résolution de manomètre.

9. Procédé selon la revendication 1, comprenant la génération (820) de l'enveloppe de bruit de dérivée à l'aide d'une dérivée de Bourdet.

10. Procédé selon la revendication 1, dans lequel le moment correspond à la distance d'influence de pression, dans lequel la distance d'influence de pression est un rayon d'étude.

11. Procédé selon la revendication 1, dans lequel la détermination comprend l'utilisation du modèle à régime infini avec et sans bruit, la génération (820) d'une dérivée du modèle à régime infini et d'une enveloppe de dérivée, et la génération (830) de dérivées de modèle de limite.

12. Procédé selon la revendication 1, comprenant, sur la base, au moins en partie, de la distance d'influence de pression, l'émission d'un signal de commande pour commander l'opération de fluide.

13. Système comprenant :

un processeur (2402) ;
une mémoire (2422-3) accessible par le processeur (2402) ;
des instructions pouvant être exécutées par le processeur stockées dans la mémoire (2422-3), pouvant être exécutées pour instruire au système de réaliser les étapes du procédé selon l'une quelconque revendication précédente.

14. Un ou plusieurs supports de stockage lisibles par ordinateur comprenant des instructions pouvant être exécutées par le processeur, pouvant être exécutées pour instruire à un système informatique de réaliser les étapes du procédé selon l'une quelconque des revendications 1 à 12.

Fig. 1

Fig. 2

**200**

TRIP
TANK — 204

PUMP — 206

210 — HIGH BOUND

208 — LOW BOUND

12 — 14

# Fig. 3

← 410            ← 430

Drill pipe

Drill collars

Reverse circulating sub

Drill collars

X over sub

Recorder above closing tool

Closing tool

Bypass

Recorder (inside)

Jars

Safety joint

Safety seal

Packer

Packer

Perforated sub

Recorder (outside)

Perforated sub

X over

Drill collars

X over

Perforated sub

For straddle test:
Packer-bull plug or
blanked off pressure gauge

# Fig. 4

←— 500

- Drillpipe
- Drill Collars
- Pump-Out Reverse Tool
- Drill Collars (1 Stand)
- Break-Off Plug Reverse Tool
- Drill Collars (1 Stand)
- Bar-Catcher
- Multi-Flow Evaluator (MFE)
- Pressure Recorder (Inside Reading)
- TR Hydraulic Jars
- Rotary Pump
- Multi-Stage Relief Valve
- Safety Joint
- Upper Inflate Packer
- Blank Spacer Pipe or Drill Collars
- Lower Inflate Packer
- Deflate Drag Spring Tool
- Pressure Recorder (Inflate Pressure)
- Bullnose

Fig. 5

600

Remainder of Test String as per MFE Open Hole String

TR Hydraulic Jar

Safety Joint

Upper Straddle Bypass Sub

Safety Seal

Upper Packer

Perforated Anchor

Lower Straddle Bypass Sub

Pressure Recorder (Outside Reading)

Pressure Recorder (Inside Reading)

Drill Collars or Blank Pipe

Lower Packer

Selective Zone Anchor

# Fig. 6

701

711
712
713
714
715
716
717
718
719
720
721
722

702

731
732
733
734
735
736
737
738
739
740
741
742
743

Fig. 7

← 800

Generate infinite acting model without noise and with noise
810

Generate infinite acting model derivative and its envelope
820

Generate boundary model derivatives and determine ROI result(s)
830

# Fig. 8

FIG. 9

FIG. 10

FIG. 11

FIG. 12

FIG. 13

1400

Receive well parameters, tool specifications, and
one or more formation property distributions
1410

Generate multiple realizations using
the one or more formation property distributions
1420

Compute ROI for each of the multiple realizations
1430

Generate ROI uncertainty indicators
1440

Fig. 14

Fig. 15

FIG. 16

**FIG. 17**

FIG. 18

FIG. 19

FIG. 20

FIG. 21

FIG. 22

← 2300

Input: well, tool/gauge, and formation properties, type of boundary (fault, circular closed, channel, etc.), potential noise types — 2310

Generate distributions of formation properties $(X)$ for using the formation properties and corresponding error in measurements. — 2320

Compute the change in pressure in the formation with IA boundary $(\Delta P_{IA})$ corresponding to $X$ — 2330

Compute the change in pressure in the formation for the boundary system specified $(\Delta P)$ corresponding to $X$ — 2340

Compute $\Delta\Delta P = \Delta P - \Delta P_{IA}$ — 2350

Add the contribution from noise to $\Delta\Delta P$ — 2360

Calculate P10, P50, and P90 of $\Delta\Delta P$ — 2370

Use P10, P50, and P90 of $\Delta\Delta P$ for calculating time at which $\Delta\Delta P \geq P_{\text{threshold}}$ — 2380

Generate P10, P50, and P90 plots of feature location and the corresponding detection times — 2390

# Fig. 23

System Components 2400

Processor(s)
2402

Memory/Storage
2404

Bus 2408

I/O Device 2406

Network System 2410

Component(s)
2422-1

Component(s)
2422-2

Network
2420

Component(s)
2422-3

Component(s)
2422-N

Fig. 24

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 63077489
- US 20150112599 A1
- US 014543
- US 20180371903 A, Li

### Non-patent literature cited in the description

- **FIKRI J. KUCHUK et al.** Radius of Investigation for Reserve Estimation from Pressure Transient Well Tests. *SPE 120515*, 01 January 2009
- **RAMAKRISHNAN et al.** Radius of Investigation in Pressure Transient Testing. *Transp Porous Med*, 2020, vol. 131, 783-804, https://doi.org/10.1007